(19) Europäisches Patentamt
European Patent Office
Office européen des brevets

(11) EP 4 648 135 A1

(12) EUROPEAN PATENT APPLICATION
published in accordance with Art. 153(4) EPC

(43) Date of publication:
**12.11.2025 Bulletin 2025/46**

(21) Application number: **24791794.1**

(22) Date of filing: **19.03.2024**

(51) International Patent Classification (IPC):
***H01M 4/525*** *(2010.01)* ***H01M 4/485*** *(2010.01)*
***H01M 4/48*** *(2010.01)*

(52) Cooperative Patent Classification (CPC):
Y02E 60/10

(86) International application number:
**PCT/CN2024/082354**

(87) International publication number:
**WO 2024/217207 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 CN 202310420121**
**18.04.2023 CN 202310420146**

(71) Applicant: **Zhuhai CosMX Battery Co., Ltd.**
**Zhuhai, Guangdong 519180 (CN)**

(72) Inventors:
- **ZENG, Jiajiang**
  **Zhuhai, Guangdong 519180 (CN)**
- **XIA, Dingguo**
  **Zhuhai, Guangdong 519180 (CN)**
- **LI, Suli**
  **Zhuhai, Guangdong 519180 (CN)**

(74) Representative: **Vossius & Partner**
**Patentanwälte Rechtsanwälte mbB**
**Siebertstrasse 3**
**81675 München (DE)**

# (54) POSITIVE ACTIVE MATERIAL AND APPLICATION THEREOF

(57) A positive active material and an application thereof. A peak I and a peak II, either of which have 20 ranging from 17.8° to 19.5°, are present in an X-ray diffraction pattern of the positive active material. The positive active material is special for improving the capacity, energy density and cycling performance of a battery.

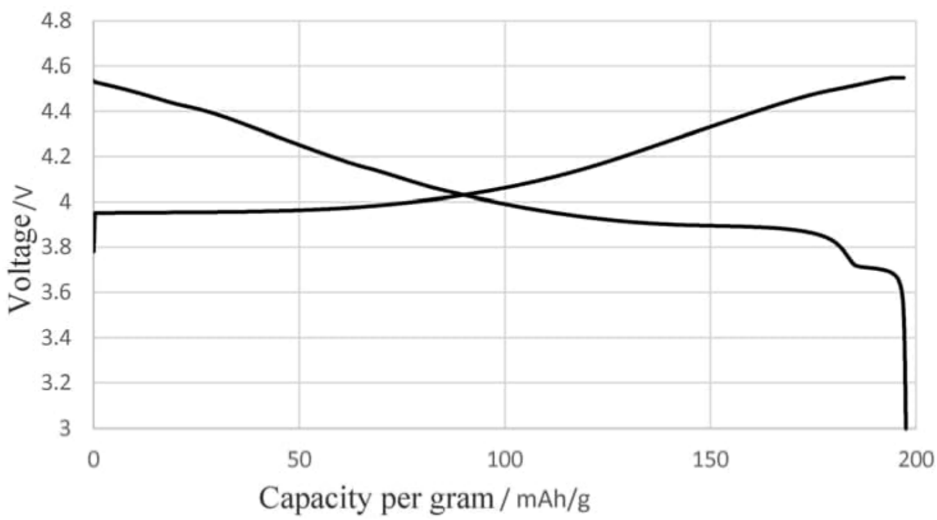


FIG. 6A



Processed by Luminess, 75001 PARIS (FR)

## Description

The present application claims priority to Chinese Patent Application No. 202310420121.0 entitled "POSITIOVE ELECTRODE ACTIVE MATERIAL AND APPLICATION THEREOF" and filed on April 18, 2023, and Chinese Patent Application No. 202310420146.0 entitled "POSITIOVE ELECTRODE ACTIVE MATERIAL AND APPLICATION THEREOF" and filed on April 18, 2023, which are incorporated by reference herein in their entireties.

## TECHNICAL FIELD

The present application relates to an electrode plate material, and in particular to a positive active material and use thereof, belonging to the technical field of secondary batteries.

## BACKGROUND

With the development and advancement of lithium-ion battery technology, the requirement for the capacity of the lithium-ion battery is increasingly high. In the composition of a lithium-ion battery, the capacity of the positive active material has a critical function in relation to the capacity of the lithium-ion battery.

In order to increase the capacity of a lithium-ion battery, the most common method is to increase its charge-discharge voltage. However, as the voltage increases, the crystal structure collapse of positive active material will occur, resulting in a series of problems such as rapid fade in capacity and significant reduction in cycling performance of a battery.

Therefore, there is an urgent need in the art to develop a positive active material with a high specific capacity for a lithium-ion battery.

## SUMMARY

The present application provides a positive active material, which has a specific composition resulting in an excellent specific capacity, and a voltage-resistance meeting the current requirements, and thus facilitating the increased capacity and cycling performance of a battery.

The present application provides a positive electrode plate, comprising the aforementioned positive active material, thus facilitating the increase of the capacity and cycling performance of battery.

The present application also provides a lithium-ion battery, comprising the aforementioned positive electrode plate, thus having excellent performance in terms of capacity and cycling performance.

The present application provides a positive active material, where the X-ray diffraction pattern of the positive active material has a peak I and a peak II with 2θ of 17.8°-19.5°.

The positive active material as described above, where the difference in 2θ between peak II and peak I is 0.92°-1.12°.

The lithium-cobalt molar ratio of the positive active material is 0.73-0.99.

The positive active material as described above, where the lithium-cobalt molar ratio of the positive active material is 0.85-0.95.

The positive active material as described above, where the positive active material has a D50 of 12-18 μm.

The positive active material as described above, where the positive active material comprises first particles and second particles, the first particles have a D50 of 3-8 μm, and the second particles have a D50 of 13-20 μm.

The positive active material as described above, where

$$5\% \leq m1/(m1 + m2) \leq 35\% \qquad \text{Formula A,}$$

here, m1 is the mass of the first particles, and m2 is the mass of the second particles.

The positive active material as described above, where $15\% \leq m1/(m1 + m2) \leq 30\%$ Formula B.

The positive active material as described above, where at least a part of the outer surface of the positive active material is covered by a coating layer.

The positive active material as described above, where the coating layer at least comprises at least one of lithium element, oxygen element and selenium element.

The positive active material as described above, where the X-ray diffraction pattern of the positive active material further has a peak III with a 2θ of 17.8°-19.5°.

The positive active material as described above, which comprises a first lithium metal oxide represented by Formula 1 and/or Formula 2, a second lithium metal oxide represented by Formula 3, and a third lithium metal oxide represented by Formula 4.

The first lithium metal oxide belongs to the orthorhombic crystal system and has a Cmca space group, and has a

002a peak with a 2θ of 17.8°-18.2° in the X-ray diffraction pattern.

The second lithium metal oxide belongs to the rhombohedral crystal system and has an R3-m space group, and has a 003 peak with a 2θ of 18.7°-19.2° in the X-ray diffraction pattern.

The third lithium metal oxide has a P63mc space group, and has a 002b peak with a 2θ of 18.4°-18.65° in the X-ray diffraction pattern.

$$Li_{n1-y1}Na_{y1}Co_{1-a1-b1}M1_{b1}M2_{a1}O_2 \qquad \text{Formula 1.}$$

$$Li_{n2-y2-b2}Na_{y2}Co_{1-a2}M1_{b2}M2_{a2}O_2 \qquad \text{Formula 2.}$$

In Formula 1, $0.6 \le n1 \le 0.8$, $0 < y1 \le 0.05$, $0 \le a1 \le 0.1$, $0 < b1 \le 0.1$, and $0 < b1/1\text{-}a1\text{-}b1 < 0.1$. In Formula 2, $0.6 \le n2 \le 0.8$, $0 < y2 \le 0.05$, $0 \le a2 \le 0.1$, and $0 < b2 \le 0.02$; In Formula 1 and Formula 2, M1 is selected from at least one of Te, W, Al, B, P and K; M2 is a doping element different from M1.

$$Li_{x3}Me_{1-y3}M_{y3}O_2,\ \text{where } Me=Co_{1-a3-b3}Al_{a3}Z_{b3} \qquad \text{Formula 3.}$$

In Formula 3, M is one or more of Al, Mg, Ti, Zr, Co, Ni, Mn, Y, La, Sr, W and Sc, and Z is one or more of Y, La, Mg, Ti, Zr, Ni, Mn and Ce; $0.95 \le x3 \le 1.03$, $0 \le y3 \le 0.1$, $0 < a3 \le 0.2$, and $0 < b3 \le 0.1$.

$$Li_{m-x4-y5}Na_{x4}Co_{1-y1}M3_{y4}M4_{y5}O_2 \qquad \text{Formula 4.}$$

In Formula 4, $0.95 \le m \le 1.03$, $0 < x4 \le 0.05$, $0 \le y4$, and $y5 \le 0.15$, and M3 and M4 are each independently selected from one or more of Al, Mg, Ti, Zr, Ni, Mn, Y, La, Sr, W, Sc, Ce, P, Nb, V, Ta, Te, B and K.

The positive active material has a D50 of 12-18 μm.

The positive active material as described above, where the lithium-cobalt molar ratio of the positive active material is 0.87-0.95.

The positive active material as described above, where the ratio of the mass of the first lithium metal oxide to the total mass of the lithium metal oxide is 5%-25%.

Here, the total mass of the lithium metal oxide is the total mass of the first lithium metal oxide, the second lithium metal oxide and the third lithium metal oxide.

The positive active material as described above, where the ratio of the mass of the first lithium metal oxide to the total mass of the lithium metal oxide is 14%-20%.

The positive active material as described above, where the first lithium metal oxide comprises particles A and/or particles B, the particles A have a D50 of 13-20 μm, and the particles B have a D50 of 3-8 μm.

The second lithium metal oxide comprises particles C and/or particles D, the particles C have a D50 of 3-8 μm, and the particles D have a D50 of 13-20 μm.

The third lithium metal oxide comprises particles E and/or particles F, the particles E have a D50 of 3-8 μm, and the particles F have a D50 of 13-20 μm.

Here, the positive active material comprises at least one of the particles A, particles D and particles F, and comprises at least one of the particles B, particles C and particles E.

The positive active material as described above, where

$$5\% \le (m_B+m_C+m_E)/(m_A+m_B+m_C+m_D+m_E+m_F) \le 35\% \qquad \text{Formula C,}$$

$m_A$, $m_B$, $m_C$, $m_D$, $m_E$ and $m_F$ are the masses of the particles A, particles B, particles C, particles D, particles E and particles F, respectively; and at least one of $m_B$, $m_C$ and $m_E$ is greater than 0.

The positive active material as described above, where

$$15\% \le (m_B+m_C+m_E)/(m_A+m_B+m_C+m_D+m_E+m_F) \le 30\% \qquad \text{Formula D.}$$

The positive active material as described above, where the volumetric particle size distribution curve of the positive active material is a bimodal distribution curve.

The present application also provides a positive electrode plate, comprising a positive active material described in any one of the above.

The present application also provides a battery, comprising a positive electrode material and/or a positive electrode plate described in any one of the above.

The battery as described above, where the negative electrode plate of the battery comprises a lithium metal.

The positive active material of the present application has excellent specific capacity and voltage resistance. Therefore, the lithium-ion battery made from the positive active material has an excellent capacity, and even under a high voltage of 4.5 V and more, the positive active material will not have the problem of structure collapse due to poor voltage-resistance. The good structural stability ensures the intercalation/deintercalation of more lithium ions, which improves the capacity and cycling performance of a lithium-ion battery.

BRIEF DESCRIPTION OF DRAWINGS

FIG. 1A is an SEM image of a first lithium metal oxide particle 1-1 of the present application.
FIG. 2A is a particle size distribution graph of Example 6A of the present application.
FIG. 3A is an SEM image of Example 6A of the present application.
FIG. 4A is an XRD pattern of the positive active material in Example 3A of the present application.
FIG. 5A is an XRD pattern of the positive active material in Example 15A of the present application.
FIG. 6A is a charge-discharge curve of a button cell obtained by assembling the positive active material in Example 1A of the present application.
FIG. 1B is an XRD pattern of the first lithium metal oxide B-1 of the present application.
FIG. 2B is an XRD pattern of the second lithium metal oxide C-1 of the present application.
FIG. 3B is an XRD pattern of the third lithium metal oxide E-1 of the present application.
FIG. 4B is a particle size distribution graph of Example 11B of the present application.
FIG. 5B is an XRD pattern of Example 1B of the present application.
FIG. 6B is an XRD pattern of Example 3B of the present application.
FIG. 7 is an XRD pattern of Example 9B of the present application.
FIG. 8 is a charge-discharge curve of a button cell obtained by assembling the positive active material in Example 3B of the present application.

**DESCRIPTION OF EMBODIMENTS**

In order to make the objects, technical solutions and advantages of the present application more apparent, technical solutions in the examples of the present application will be described apparently and completely below in conjunction with the examples of the present application. It is apparent that the examples described are a part of, rather than all of the examples of the present application. All other embodiments obtained by those of ordinary skill in the art based on the examples of the present application without creative efforts shall fall within the scope of protection of the present application.

A first aspect of the present application provides a positive active material, the X-ray diffraction pattern of which has a peak I and a peak II with 20 of 17.8°-19.5°.

The positive active material of the present application is subjected to X-ray diffraction and shows two different peaks in 2θ: a peak I and a peak II with 20 of 17.8°-19.5°.

With the peak I and the peak II, the positive active material has excellent specific capacity and voltage resistance. Therefore, the lithium-ion battery made from the positive active material has an excellent capacity, and even under a high voltage of 4.5 V and more, the positive active material will not have the problem of structure collapse due to poor voltage-resistance. The good structural stability ensures the intercalation/deintercalation of more lithium ions, which improves the capacity and cycling performance of a lithium-ion battery.

In a specific embodiment, the difference in 2θ between peak II and peak I is 0.92°-1.12°. The lithium-cobalt molar ratio of the positive active material is 0.73-0.99. The 20 of peak II is greater than that of peak I, with a difference being 0.92°-1.12°.

The aforementioned lithium-cobalt molar ratio refers to the molar ratio of the lithium element to the cobalt element at the time when the positive active material has not been subjected to any charge-discharge treatment,

or the molar ratio of the lithium element to the cobalt element in the positive active material in a battery that has only been subjected to a formation treatment and not a discharge treatment (not having reached 0% SOC). Specifically, when a battery that has only been subjected to a formation treatment (without limitation on the charge mechanism of the formation treatment) and has not been subjected to discharge is discharged to 3.0 V at a rate of 0.1C (the final cut-off voltage is in a range of 3.0-3.6 V), under a 0% SOC potential, the current lithium-cobalt molar ratio of the positive active material in the positive electrode plate of the battery is the lithium-cobalt molar ratio of the present application; or, after the positive active material is used in a battery and subjected to a formation treatment and a discharge treatment (the discharge treatment refers to the discharge treatment after up to 10 cycles), the molar ratio of the lithium

element to the cobalt element in the positive active material is the lithium-cobalt molar ratio of the disclosure. Specifically, when the battery after formation is subjected to no more than 10 cycles of charge-discharge and then discharged to 3.0 V at a rate of 0.1C (the final cut-off voltage is in the range of 3.0-3.6 V), under a 0% SOC potential, the current lithium-cobalt molar ratio of the positive active material in the positive electrode plate of the battery is the lithium-cobalt molar ratio of the present application.

In the present application, there are no limitations on the test method for the lithium-cobalt molar ratio, for example, an inductively coupled plasma (ICP) spectrometer may be used to test the positive active material. Alternatively, when the positive active material in the positive electrode plate is tested, the discharged battery is disassembled, and the positive electrode plate is taken out, soaked in dimethyl carbonate (DMC) for 1-3 h or rinsed with DMC, naturally dried in a drying room, and then placed in a muffle furnace and calcined at 300-600°C for 2-5 h. After that, the active layer is shed from the current collector, followed by sieving at 200 mesh to obtain the powder to be tested. Then, the metal elements in the powder to be tested are tested by ICP, and the lithium-cobalt molar ratio is calculated.

The positive active material provided in accordance with the present application can improve the energy density and cycling performance of a lithium-ion battery, and has excellent performance especially under a high voltage condition. Based on this phenomenon, the inventors analyzed why the performance of the lithium-ion battery is optimized, and the reason may be that: with two diffraction peaks of peak I and peak II, the positive active material is a compound with a layered structure. In the present application, the angle of diffraction peak I is smaller than that of diffraction peak II with a difference in a proper range of 0.92°-1.12°. Therefore, with the structural stability ensured, the positive active material has a larger interlayer spacing than that of a commercial lithium cobaltate, making it easier to realize the intercalation/deintercalation of lithium ions. Specifically, during a charge-discharge, the positive active material exhibits a better electron conductivity under a high voltage than that of the existing commercial lithium cobaltate, which more facilitates the lithium-ion intercalation/deintercalation and thus results in a higher capacity and a better cycling performance. In addition to the improved voltage resistance and specific capacity, the positive active material also has a first-time charge-discharge efficiency of 97%-145%. Specifically, a button cell assembled from the positive active material and lithium metal is charged and discharged for the first time at a rate of 0.1C, with the charge cut-off voltage being 4.5-4.6 V and the discharge cut-off voltage being 3.0 V. The first-time charge-discharge efficiency is calculated from the ratio of the capacity per gram C0 (mAh/g) of first-time charge to the capacity per gram D0 (mAh/g) of first-time discharge.

In the present application, there are no limitations on the chemical composition of the positive active material.

For example, the positive active material at least includes a lithium element, a sodium element and a cobalt element. More specifically, the chemical Formula of the positive active material may be Formula I or Formula II.

$$ALi_{n1-y1}Na_{y1}Co_{1-a1-b1}M1_{b1}M2_{a1}O_2\cdot DLi_{x3}Me_{1-y3}M_{y3}O_2 \qquad \text{Formula I.}$$

$$ELi_{n2-y2-b2}Na_{y2}Co_{1-a2}M1_{b2}M2_{a2}O_2\cdot GLi_{x3}Me_{1-y3}M_{y3}O_2 \qquad \text{Formula II.}$$

In Formula I, $0.6 \leq n1 \leq 0.8$, $0 < y1 \leq 0.05$, $0 \leq a1 \leq 0.1$, $0 < b1 \leq 0.1$, $0 < b1/1\text{-}a1\text{-}b1 < 0.1$, $0.95 \leq x3 \leq 1.03$, $0 \leq y3 \leq 0.1$, $0 < a3 \leq 0.2$, and $0 < b3 \leq 0.1$; M1 is selected from at least one of Te, W, Al, B, P and K; M2 is a doping element different from M1; M is one or more of Al, Mg, Ti, Zr, Co, Ni, Mn, Y, La, Sr, W and Sc; Z is one or more of Y, La, Mg, Ti, Zr, Ni, Mn and Ce; and $A > 0$, $D > 0$.

In Formula II, $0.6 \leq n2 \leq 0.8$, $0 < y2 \leq 0.05$, $0 \leq a2 \leq 0.1$, $0 < b2 \leq 0.02$, $0.95 \leq x3 \leq 1.03$, $0 \leq y3 \leq 0.1$, $0 < a3 \leq 0.2$, and $0 < b3 \leq 0.1$; M1 is selected from at least one of Te, W, Al, B, P and K; M2 is a doping element different from M1; M is one or more of Al, Mg, Ti, Zr, Co, Ni, Mn, Y, La, Sr, W and Sc; Z is one or more of Y, La, Mg, Ti, Zr, Ni, Mn and Ce; and $E > 0$, $G > 0$.

Further, the positive active material of the present application has a lithium-cobalt molar ratio of 0.85-0.95. Such a lithium-cobalt molar ratio facilitates the further improvement of the specific capacity of positive active material and the intercalation/deintercalation efficiency of lithium ions, thereby achieving a significant improvement in the capacity and cycling performance of a lithium-ion battery. The positive active material with such a lithium-cobalt molar ratio has a first-time charge-discharge efficiency of 97%-103%.

In addition, when the D50 (the particle size at which the cumulative volume reaches 50% of the total volume of all the positive active material) of the positive active material of the present application is 12-18 μm, the improvement in the energy density of a lithium-ion battery can also be facilitated. The inventors speculate that, maybe since the positive active material with such a particle size has excellent performance in terms of flowability and more easily forms a closely packed state, the energy density of a lithium-ion battery in turn can be improved by the compacted density of positive active material.

Further, the volumetric particle size distribution curve of the positive active material of the present application is a bimodal distribution curve. Through the curve feature of the bimodal distribution, the D50 of the positive active material can be limited to 12-18 μm.

In detail, the positive active material is tested with a laser particle sizer, showing that the volumetric particle size

distribution curve of the positive active material is apparently bimodal. Even if the positive active material is present in the positive electrode active layer of the positive electrode plate, the positive electrode active layer can be disassembled, such that the positive electrode plate is taken out, soaked in dimethyl carbonate (DMC) for 3 h, naturally dried in a drying room, and then placed in a muffle furnace for calcination at 300°C for 3 h such that the positive electrode powder can be separated from the current collector, and then sieved at 200 mesh to obtain a sample powder. The powder is ultrasonicated for 2 min, followed by a test using a laser particle sizer.

In the present application, there are no limitations on the specific embodiment for achieving the bimodal distribution of the aforementioned curve feature. For example, limiting the particle size composition of the positive active material facilitates realizing the curve feature of the bimodal distribution. In a specific embodiment, the positive active material comprises first particles and second particles, the first particles have a D50 of 3-8 μm, and the second particles have a D50 of 13-20 μm.

Further, when the first particles and the second particles satisfy the definition of Formula A, still further, when the first particles and the second particles satisfy the definition of Formula B, the positive active material not only realizes the bimodal curve feature, but also has excellent performance in compacted density, which in turn facilitates the further improvement of the energy density and cycling performance of a lithium-ion battery.

$$5\% \leq m_1/(m_1+m_2) \leq 35\% \qquad \text{Formula A.}$$

$$15\% \leq m_1/(m_1+m_2) \leq 30\% \qquad \text{Formula B.}$$

In Formula A and Formula B, m1 is the mass of the first particles, m2 is the mass of the second particles.

Further, at least a part of the outer surface of the positive active material is covered by a coating layer. In an embodiment, the coating layer at least includes at least one of a lithium element, an oxygen element and a selenium element. For example, the coating layer is one of a lithium-containing coating layer, an oxide coating layer and an elementary selenium layer. More specifically, the lithium-containing coating layer is, for example, an LATP coating layer; The oxide coating layer is a metal oxide coating layer or a non-metal oxide coating layer, such as magnesium oxide and aluminium oxide.

In the present application, there are no limitations on the preparation method for the aforementioned positive active material, and in a possible implementation, the positive active material is prepared by a method including the following procedure:

a first lithium metal oxide represented by Formula 1-1 and/or Formula 1-2 and a second lithium metal oxide represented by Formula 1-3 are subjected to a sintering treatment and/or a coating treatment to obtain the positive active material.

$$Li_{n1-y1}Na_{y1}Co_{1-a1-b1}M1_{b1}M2_{a1}O_2 \qquad \text{Formula 1-1.}$$

$$Li_{n2-y2-b2}Na_{y2}Co_{1-a2}M1_{b2}M2_{a2}O_2 \qquad \text{Formula 1-2.}$$

In Formula 1-1, $0.6 \leq n1 \leq 0.8$, $0 < y1 \leq 0.05$, $0 \leq a1 \leq 0.1$, $0 < b1 \leq 0.1$, and $0 < b1/1\text{-}a1\text{-}b1 < 0.1$; In Formula 1-2, $0.6 \leq n2 \leq 0.8$, $0 < y2 \leq 0.05$, $0 \leq a2 \leq 0.1$, and $0 < b2 \leq 0.02$; In Formula 1 and Formula 2, M1 is selected from at least one of Te, W, Al, B, P and K; M2 is a doping element different from M1.

$$Li_{x3}Me_{1-y3}M_{y3}O_2\text{, where } Me=Co_{1-a3-b3}Al_{a3}Z_{b3} \qquad \text{Formula 1-3.}$$

In Formula 1-3, M is one or more of Al, Mg, Ti, Zr, Co, Ni, Mn, Y, La, Sr, W and Sc, and Z is one or more of Y, La, Mg, Ti, Zr, Ni, Mn and Ce; $0.95 \leq x3 \leq 1.03$, $0 \leq y3 \leq 0.1$, $0 < a3 \leq 0.2$, and $0 < b3 \leq 0.1$.

The aforementioned first lithium metal oxide has the chemical composition of Formula 1-1 and/or Formula 1-2, that is, the first lithium metal oxide may comprise only the compound of Formula 1-1, and only the compound of Formula 1-2, or both the compound of Formula 1-1 and the compound of Formula 1-2. In addition, based on the composition of Formula 1-1 and Formula 1-2, the Formula 1-1 and Formula 1-2 may also represent the same compound. Further, in Formula 1-1, M1 is selected from one of Al, W and/or Te, B and/or P; In Formula 1-2, M1 is K.

The aforementioned second lithium metal oxide has the chemical composition represented by Formula 1-3.

It should be noted that in the present application, there are no limitations on the specific number of compounds that satisfy the aforementioned Formula 1-1, Formula 1-2 and Formula 1-3. For example, the first lithium metal oxide satisfying Formula 1-1 may be one or more compounds with different chemical compositions, and for example, the second lithium metal oxide satisfying Formula 1-3 may be one or more compounds with different chemical compositions.

The aforementioned sintering treatment includes mixing the first lithium metal oxide and the second lithium metal oxide, and then sintering the mixture at 150°C -350°C for 5-60 min to obtain the positive active material of the present

application. In the present application, there are no limitations on the specific apparatus for the sintering treatment, for example, a muffle furnace may be used.

The aforementioned coating treatment includes mixing the first lithium metal oxide and the second lithium metal oxide to form a mixture, and then using the raw material of the coating layer and atomic layer deposition (ALD) to obtain a positive active material with a lithium-containing coating layer or an oxide coating layer formed on the surface. Here, the lithium-containing coating layer refers to a coating layer comprising a lithium element, such as an LATP coating layer; The oxide coating layer is a metal oxide coating layer or a non-metal oxide coating layer, such as magnesium oxide and aluminium oxide. The thickness of the coating layer is not more than 100 nm, preferably not more than 20 nm, for example, 2 nm, 5 nm, 7 nm, 10 nm, 13 nm, 15 nm, 18 nm and 20 nm.

More specifically, in an embodiment, when the coating layer is a lithium-containing coating layer, the first lithium metal oxide and the second lithium metal oxide are placed in the reaction cavity of an ALD reaction apparatus, the reaction temperature is controlled, the lithium source and other coating layer raw materials are introduced to the reaction cavity using an inert gas as a carrier gas, to realize the atomic layer deposition by pulses at intervals and thereby form a lithium-containing coating layer.

Further, the lithium source is an organolithium compound, for example, lithium tert-butoxide and lithium bis(trimethylsilyl)amine. Other coating layer materials refer to materials other than lithium source used to form the lithium-containing coating layer, for example, when the coating layer is LATP, other coating layer materials refer to compounds respectively containing aluminium, phosphorus and titanium, such as titanium tetrachloride, an organophosphorus compound such as trimethylphosphine, and an organoaluminium compound such as trimethylaluminum.

In another embodiment, when the coating layer is an oxide, the first lithium metal oxide and the second lithium metal oxide are placed in the reaction cavity of ALD reaction apparatus, the reaction temperature is controlled, the coating layer raw material is introduced to the reaction cavity using an inert gas as a carrier gas, to realize the atomic layer deposition by pulses intervals and thereby form the oxide coating layer.

Further, when the oxide coating layer is alumina, the coating layer raw material is trimethylaluminum; and when the oxide coating layer is magnesium oxide, the coating layer raw material is magnesocene, etc; Any material that can form an oxide coating layer may be used as the coating layer raw material of the present application, and not all the examples will be given in the present application.

In the aforementioned ALD coating treatment, the reaction temperature is 120°C - 350°C, for example, 150°C, 170°C, 180°C, 220°C, 250°C, 270°C, 300°C, 330°C and 350°C. The number of the pulses at intervals is 20-220, for example, 30, 50, 70, 90, 100, 120, 140, 150, 150 and 200 are possible; The inert gas includes argon or nitrogen; The flow rate of the carrier gas is 20-100 mL/min, for example, 20 mL/min, 40 mL/min, 50 mL/min, 80 mL/min and 100 mL/min.

Alternatively, the aforementioned coating treatment includes mixing the first lithium metal oxide and the second lithium metal oxide, and using the coating layer raw material and high-temperature sintering to form a positive active material with an elementary selenium coating layer. The thickness of the coating layer is not more than 100 nm, preferably not more than 20 nm, for example, 2 nm, 5 nm, 7 nm, 10 nm, 13 nm, 15 nm, 18 nm and 20 nm.

More specifically, the first lithium metal oxide, the second lithium metal oxide and a stoichiometric ratio of Se are mixed until uniform using a corresponding mixing apparatus, and then placed in a corresponding sintering apparatus (e.g., muffle furnace) for a sintering treatment to obtain a positive active material with an elementary selenium coating layer.

In the aforementioned coating treatment of elementary selenium layer, the mass percentage of Se in the positive active material is not more than 0.5%; The temperature of the sintering treatment is 200-350°C, preferably 250-350°C; The time for sintering treatment is 5-60 min, preferably 25-50 min.

When the positive active material having the first particles and the second particles is prepared according to the aforementioned method, this can be realized by controlling the D50 of the first lithium metal oxide and the second lithium metal oxide. For example, both the first lithium metal oxide and/or the second lithium metal oxide can comprises the particles with D50 of 3-8 μm and 13-20 μm, or one of the first lithium metal oxide and the second lithium metal oxide comprises the particles with a D50 of 3-8 μm, the other comprises the particles with a D50 of 13-20 μm, such that the positive active material has the first particles and the second particles mentioned above. Additionally, the aforementioned definition of Formula A and Formula B can be realized by controlling the masses of the particles in the first lithium metal oxide and/or the second lithium metal oxide. That is, the composition and mass of the aforementioned particles in the first lithium metal oxide and/or the second lithium metal oxide are used to realize the definition of the composition of particles and the mass ratio between particles.

In a specific embodiment, the ratio of the mass of the first lithium metal oxide to the total mass of the lithium metal oxide can be 5-90%, such that the aforementioned lithium-cobalt molar ratio can be realized, thus achieving the effect in significantly improving the capacity, initial efficiency and cycling performance of a lithium-ion battery. Here, the total mass of the lithium metal oxide is the total mass of the first lithium metal oxide and the second lithium metal oxide.

In the positive active material of the present application, the first lithium metal oxide and the second lithium metal oxide may be in a monocrystalline morphology or a polycrystalline morphology, and the specific morphology is related to the choice and proportion of the doping element. Specifically, in the case of polycrystalline morphology, the first lithium

metal oxide and the second lithium metal oxide are spherical or spheroid-like particles; and in the case of monocrystalline morphology, the first lithium metal oxide and the second lithium metal oxide may be in the shape of whiskers, flakes, or any other irregular shape.

In the present application, there are no limitations on the preparation method for the aforementioned first lithium metal oxide, and in a specific embodiment, a cobalt source, a sodium source, an M1 source and an M2 source are mixed in a target ratio and then subjected to a calcination treatment (700-900°C for 8-50 h) to obtain an oxide containing sodium, cobalt, M1 and M2. Then, the oxide is mixed with a lithium source for a heat treatment (80°C-300°C, not more than 10 h) to obtain the first lithium metal oxide.

In the present application, there are no limitations on the specific choice of the cobalt source, sodium source, M1 source and M2 source. For example, the cobalt source is selected from one or more of cobalt hydroxide, tricobalt tetraoxide, doped tricobalt tetraoxide, cobaltous oxide, cobalt oxyhydroxide, cobalt nitrate, cobalt sulphate etc; The sodium source is selected from one or more of sodium carbonate, sodium nitrate, sodium hydroxide, sodium bicarbonate, sodium sulphate etc; The M1 source may be the oxide of M1, and when M1 is W, the M1 source is, for example, tungstic acid and/or sodium tungstate, etc. When M1 is Te, the M1 source is, for example, telluric acid and/or sodium tellurate, etc. When M1 is Al, the M1 source is, for example, one or more of aluminium sulphate, aluminium nitrate, aluminium hydroxide etc; When M1 is B, the M1 source is, for example, boric acid and/or sodium borate, etc. When M1 is P, the M1 source is, for example, phosphoric acid and/or sodium phosphate, etc. When M1 is K, the M1 source is, for example, one or more of potassium carbonate, potassium nitrate, potassium hydroxide, potassium bicarbonate, potassium sulphate, etc. The M2 source may be the oxide of M2, for example, one or more of basic magnesium carbonate, magnesium hydroxide, zirconium oxide, yttrium oxide, lanthanum oxide, lanthanum fluoride, nickel oxide, niobium oxide, etc.

In the present application, there are no limitations on the preparation method for the second lithium metal oxide, which is a lithium cobaltate material commercially available at present.

It should be noted that in an embodiment, when the first lithium metal oxide and the second lithium metal oxide are prepared, the particle size of the metal source raw material may be limited to finally obtaining the first lithium metal oxide and the second lithium metal oxide with a particle size meeting the expected D50.

In another embodiment, the X-ray diffraction pattern of the positive active material further has a peak III with a 2θ of 17.8°-19.5°.

In detail, the positive active material comprises a first lithium metal oxide represented by Formula 1 and/or Formula 2, a second lithium metal oxide represented by Formula 3, and a third lithium metal oxide represented by Formula 4.

The first lithium metal oxide belongs to the orthorhombic crystal system and has a Cmca space group, and the X-ray diffraction pattern has a 002a peak with a 2θ of 17.8° -18.2°.

The second lithium metal oxide belongs to the rhombohedral crystal system and has an R3-m space group, and the X-ray diffraction pattern has a 003 peak with a 2θ of 18.7°-19.2°.

The third lithium metal oxide has a P63mc space group, and the X-ray diffraction pattern has a 002b peak with a 20 of 18.4°-18.65°.

$$Li_{n1-y1}Na_{y1}Co_{1-a1-b1}M1_{b1}M2_{a1}O_2 \quad \text{Formula 1.}$$

$$Li_{n2-y2-b2}Na_{y2}Co_{1-a2}M1_{b2}M2_{a2}O_2 \quad \text{Formula 2.}$$

In Formula 1, $0.6 \le n1 \le 0.8$, $0 < y1 \le 0.05$, $0 \le a1 \le 0.1$, $0 < b1 \le 0.1$, and $0 < b1/1-a1-b1 < 0.1$; In Formula 2, $0.6 \le n2 \le 0.8$, $0 < y2 \le 0.05$, $0 \le a2 \le 0.1$, and $0 < b2 \le 0.02$; In Formula 1 and Formula 2, M1 is selected from at least one of Te, W, Al, B, P and K; M2 is a doping element different from M1.

$$Li_{x3}Me_{1-y3}M_{y3}O_2\text{, where }Me=Co_{1-a3-b3}Al_{a3}Z_{b3} \quad \text{Formula 3.}$$

In Formula 3, M is one or more of Al, Mg, Ti, Zr, Co, Ni, Mn, Y, La, Sr, W and Sc, and Z is one or more of Y, La, Mg, Ti, Zr, Ni, Mn and Ce; $0.95 \le x3 \le 1.03$, $0 \le y3 \le 0.1$, $0 < a3 \le 0.2$, and $0 < b3 \le 0.1$.

$$Li_{m-x4-y5}Na_{x4}Co_{1-y1}\ M3_{y4}M4_{y5}O_2 \quad \text{Formula 4.}$$

In Formula 4, $0.95 \le m \le 1.03$, $0 < x4 \le 0.05$, $0 \le y4$, and $y5 \le 0.15$, and M3 and M4 are each independently selected from one or more of Al, Mg, Ti, Zr, Ni, Mn, Y, La, Sr, W, Sc, Ce, P, Nb, V, Ta, Te, B and K.

The positive active material has a D50 of 12-18 μm.

In detail, the aforementioned 002a peak is the diffraction peak of the 002 crystal plane of the first lithium metal oxide, the 003 peak is the diffraction peak of the 003 crystal plane of the second lithium metal oxide, and the 002b peak is the diffraction peak of the 002 crystal plane of the third lithium metal oxide. The 002a peak, 003 peak and 002b peak can be

understood as one of peak I, peak II and peak III respectively.

In addition to the orthorhombic crystal system with a Cmca space group and the 002a peak, the first lithium metal oxide in the positive active material of the present application has the chemical composition of Formula 1 and/or Formula 2, i.e., the first lithium metal oxide may comprise only the compound shown in Formula 1, or only the compound shown in Formula 2, or compounds shown in Formula 1 and Formula 2. In addition, based on the composition of Formula 1 and Formula 2, Formula 1 and Formula 2 may represent the same compound. Further, in Formula 1, M1 is selected from one of Al, W and/or Te, B and/or P; In Formula 2, M1 is K.

In addition to the rhombohedral crystal system with an R3-m space group and the aforementioned 003 peak, the second lithium metal oxide in the positive active material of the present application has the chemical composition shown in Formula 3.

In addition to the P63mc space group and the aforementioned 002b peak, the third lithium metal oxide in the positive active material of the present application has the chemical composition of Formula 4.

It should be noted that the positive active material of the present application is required to comprise all the first lithium metal oxide, the second lithium metal oxide and the third lithium metal oxide. In addition, the lithium metal oxide satisfying any Formula may be one or more compounds with different compositions, for example, the first lithium metal oxide satisfying Formula 1 may be one or more compounds with different chemical compositions, and for example, the third lithium metal oxide satisfying Formula 4 may be one or more compounds with different chemical compositions.

The positive active material of the present application comprises the first lithium metal compound, the second lithium metal compound and the third lithium metal compound. The specific combination of the three lithium metal compounds significantly improves the specific capacity and voltage-resistance of the positive active material. The positive active material provided in accordance with the present application can improve the capacity and cycling performance of a lithium-ion battery, and has excellent performance especially under a high voltage condition. Based on this phenomenon, the inventors analyzed why the performance of the lithium-ion battery is optimized, and the reason may be that: the positive active material comprising the first lithium metal oxide, the second lithium metal oxide and the third lithium metal oxide having the aforementioned crystalline structures and chemical compositions has an improved well-developed layered crystalline phase structure with an optimized interlayer spacing. Therefore, on the one hand, the smooth intercalation/-deintercalation of a large number of lithium ions is achieved, and on the other hand, the structure collapse that may occur under high-voltage is effectively suppressed, and finally the lithium-ion battery exhibits excellent capacity and cycling performance.

In addition, when the D50 (the particle size at which the cumulative volume reaches 50% of the total volume of all the positive active material) of the positive active material of the present application is 12-18 $\mu$m, the improvement in the capacity of a lithium-ion battery can also be facilitated. The inventors speculate that, maybe since the positive active material with such a particle size has excellent performance in terms of flowability and more easily forms a closely packed state, the energy density and cycling performance of a lithium-ion battery in turn can be improved by the compacted density of positive active material.

In addition to the improved voltage resistance and specific capacity, the positive active material also has a higher first-time charge-discharge efficiency. Specifically, a button cell assembled from the positive active material and lithium metal is charged and discharged for the first time at a rate of 0.1C, with the charge cut-off voltage being 4.5-4.6 V and the discharge cut-off voltage being 3.0 V. The first-time charge-discharge efficiency is calculated from the ratio of the capacity per gram C0 (mAh/g) of first-time charge to the capacity per gram D0 (mAh/g) of first-time discharge.

When the positive active material of the present application in accordance with the aforementioned definition is subjected to an XRD test, the diffraction data of the positive active material satisfies: the intensity of 003 peak/the intensity of 002a peak > 1.5, and the 20 of 002b peak-the 20 of 002a peak > the 20 of 003 peak-the $2\theta$ of 002b peak. Here, the 20 of 002a peak is 17.8°-18.2°, the 20 of 002b peak is 18.4°-18.65°, and the 20 of 003 peak is 18.7°-19.2°.

In the present application, there are no limitations on the preparation method for the positive active material, so long as it includes the step of mixing the first lithium metal oxide, the second lithium metal oxide and the third lithium metal oxide.

Further, the positive active material of the present application has a lithium-cobalt molar ratio of 0.87-0.95. Such a lithium-cobalt molar ratio facilitates the further improvement of the specific capacity of positive active material and the intercalation/deintercalation efficiency of lithium ions, thereby achieving a significant improvement in the capacity and cycling performance of a lithium-ion battery. The positive active material with such a lithium-cobalt molar ratio has a first-time charge-discharge efficiency of 97%-103%.

It should be noted that the lithium-cobalt ratio is the lithium-cobalt ratio of the positive electrode material powder.

or the aforementioned lithium-cobalt molar ratio is the molar ratio of the lithium element to the cobalt element in the positive active material in a battery that has only been subjected to a formation treatment and not a discharge treatment (not having reached 0% SOC). Specifically, when a battery that has only been subjected to a formation treatment (without limitation on the charge mechanism of the formation treatment) and has not been subjected to

discharge is discharged to 3.0 V at a rate of 0.1C (the final cut-off voltage is in a range of 3.0-3.6 V), under a 0% SOC potential, the current lithium-cobalt molar ratio of the positive active material in the positive electrode plate of the battery is the lithium-cobalt molar ratio of the present application, and the lithium-cobalt molar ratio is 0.87-0.95; alternatively, the lithium-cobalt molar ratio is the molar ratio of the lithium element and the cobalt element in the positive active material after the positive active material is used in a battery and subjected to a formation treatment and a discharge treatment (the discharge treatment refers to the discharge treatment after up to 10 cycles). Specifically, when the battery after formation is subjected to no more than 10 cycles of charge-discharge and then discharged to 3.0 V at a rate of 0.1C (the final cut-off voltage is in the range of 3.0-3.6 V), under a 0% SOC potential, the current lithium-cobalt molar ratio of the positive active material in the positive electrode plate is the lithium-cobalt molar ratio of the present application, and the lithium-cobalt molar ratio is 0.87-0.95.

In the present application, there are no limitations on the test method of the lithium-cobalt molar ratio, for example, an inductively coupled plasma (ICP) spectrometer may be used for test. For example, when the lithium-cobalt molar ratio of the positive active material in the battery satisfying the aforementioned requirement is tested, for example, an inductively coupled plasma (ICP) spectrometer may be used to test the positive active material. Alternatively, when the positive active material in the positive electrode plate is tested, the discharged battery is disassembled, and the positive electrode plate is taken out, soaked in dimethyl carbonate (DMC) for 1-3 h or rinsed with DMC, naturally dried in a drying room, and then placed in a muffle furnace and calcined at 300-600°C for 2-5 h. After that, the active layer is shed from the current collector, followed by sieving at 200 mesh to obtain the powder to be tested. Then, the metal elements in the powder to be tested are tested by ICP, and the lithium-cobalt molar ratio is calculated.

In a specific embodiment, the ratio of the mass of the first lithium metal oxide to the total mass of the lithium metal oxide can be 5-25%, such that the aforementioned lithium-cobalt molar ratio can be realized, thus achieving the above effect in significantly improving the capacity, initial efficiency and cycling performance of a lithium-ion battery. Here, the total mass of the lithium metal oxide is the total mass of the first lithium metal oxide, the second lithium metal oxide and the third lithium metal oxide.

Further, when the ratio of the mass of the first lithium metal oxide to the total mass of the lithium metal oxide is 14-20%, the further reduce in the lithium consumption during the charge-discharge of lithium-ion battery is facilitated, and thereby the cycling performance is further optimized.

It should be noted that when a positive active material obtained by mixing the first lithium metal oxide, the second lithium metal oxide and the third lithium metal oxide in a certain mass ratio is tested by the aforementioned inductively coupled plasma (ICP) spectrometer, the result thus obtained is the initial lithium-cobalt molar ratio of the positive active material (i.e., the lithium-cobalt molar ratio of the positive active material that has not been subjected to a formation treatment and a discharge treatment). Typically, an initial lithium-cobalt molar ratio of 0.91-0.99, further, an initial lithium-cobalt molar ratio of 0.935-0.98 helps achieve the aforementioned lithium-cobalt molar ratio of 0.85-0.95.

In the present application, the lithium-cobalt molar ratio is reduced compared with the initial lithium-cobalt molar ratio. This is because during the charge-discharge of the three lithium metal oxides with the aforementioned crystalline structure, when lithium ions pass the negative electrode, a part of ions will be consumed and lost due to film formation, and thus the molar amount of the lithium ions will decrease compared with that before the charge-discharge.

In a specific embodiment, the volumetric particle size distribution curve of the positive active material of the present application is a bimodal distribution curve. Through the curve feature of the bimodal distribution, the D50 of the positive active material can be limited to 12-18 μm.

In details, the positive active material is tested with a laser particle sizer, showing that the volumetric particle size distribution curve of the positive active material is apparently bimodal. Even if the positive active material is present in the positive electrode active layer of the positive electrode plate, the positive electrode active layer can be disassembled, such that the positive electrode plate is taken out, soaked in dimethyl carbonate (DMC) for 3 h, naturally dried in a drying room, and then placed in a muffle furnace for calcination at 300°C for 3 h such that the positive electrode powder can be separated from the current collector, and then sieved at 200 mesh to obtain a sample powder. The powder is ultrasonicated for 2 min, followed by a test using a laser particle sizer.

In the present application, there are no limitations on the specific embodiment for achieving the bimodal distribution of the aforementioned curve feature. For example, limiting the particle size composition of the positive active material facilitates realizing the curve feature of the bimodal distribution. In the present application, the particle sizes of the first lithium metal oxide, the second lithium metal oxide and the third lithium metal oxide are limited to control the D50 of the aforementioned positive active material.

In a specific embodiment, the first lithium metal oxide comprises particles A and/or particles B, the particles A have a D50 of 13-20 μm, and the particles B have a D50 of 3-8 μm. The second lithium metal oxide comprises particles C and/or particles D, the particles C have a D50 of 3-8 μm, and the particles D have a D50 of 13-20 μm. The third lithium metal oxide comprises particles E and/or particles F, the particles E have a D50 of 3-8 μm, and the particles F have a D50 of 13-20 μm. Here, the positive active material comprises at least one of the particles A, particles D and particles F, and comprises at

least one of the particles B, particles C and particles E.

The aforementioned "and/or" means that the lithium metal oxide may include only one or both of the particles. For example, the third lithium metal oxide may include particles E, or particles F, or both particles E and particles F.

In detail, when the first lithium metal oxide includes only one compound of a chemical composition, the first lithium metal oxide may include particles A and/or particles B. When the first lithium metal oxide includes two or more compounds with different chemical compositions, the two or more compounds each independently include particles A and/or particles B.

Likewise, when the second lithium metal oxide includes only one compound of a chemical composition, the second lithium metal oxide may include particles C and/or particles D. When the second lithium metal oxide includes two or more compounds with different chemical compositions, the two or more compounds each independently include particles C and/or particles D.

When the third lithium metal oxide includes only one compound of a chemical composition, the third lithium metal oxide may include particles E and/or particles F. When the third lithium metal oxide includes two or more compounds with different chemical compositions, the two or more compounds each independently include particles E and/or particles F.

It should be particularly noted that the positive active material including the aforementioned first lithium metal oxide, the second lithium metal oxide and the third lithium metal oxide with different D50 at least includes one of particles A, particles D and particles F, and at least includes one of particles B, particles C and particles E.

In the present application, the aforementioned limitation on the particle size of the first lithium metal oxide, the second lithium metal oxide and the third lithium metal oxide are conducive to achieving the curve feature of the bimodal distribution of the positive active material, thus limiting the D50 to 12-18 μm.

Further, when the masses $m_A$, $m_B$, $m_C$, $m_D$, $m_E$ and $m_F$ of the particles A, particles B, particles C, particles D, particles E and particles F satisfy Formula C, still further, when the masses $m_A$, $m_B$, $m_C$, $m_D$, $m_E$ and $m_F$ of the particles A, particles B, particles C, particles D, particles E and particles F satisfy Formula D, the positive active material can not only achieve the feature of the bimodal curve, but also have excellent performance in terms of compacted density, thus facilitating the further improvement of the energy density of a lithium-ion battery.

$$5\% \leq (m_B+m_C+m_E)/(m_A+m_B+m_C+m_D+m_E+m_F) \leq 35\% \qquad \text{Formula C.}$$

$$15\% \leq (m_B+m_C+m_E)/(m_A+m_B+m_C+m_D+m_E+m_F) \leq 30\% \qquad \text{Formula D.}$$

In Formula C, the ratio of the total mass of the particles of each of the three lithium metal oxides with a small D50 (particles B, particles C and particles E) to the total mass of the particles A, particles B, particles C, particles D, particles E and particles F of the three lithium metal oxides is 5%-35%. In Formula D, the ratio of the total mass of the particles of each of the three lithium metal oxides with a small D50 (particles B, particles C and particles E) to the total mass of the particles A, particles B, particles C, particles D, particles E and particles F of the three lithium metal oxides is 15%-30%.

It can be appreciated that, in order to satisfy Formula C and Formula D, the total mass of particles B, particles C and particles E is greater than 0, and the mass of at least one of particles A, particles D and particles F is greater than 0.

Further, at least one of the first lithium metal oxide, the second lithium metal oxide and the third lithium metal oxide is of a core-shell structure. The core-shell structure defined in the present application refers to a structure in which one of the first lithium metal oxide, the second lithium metal oxide and the third lithium metal oxide serves as a core and at least a part of the surface of the core is covered by a coating layer. When at least a part of the surface of any one of the first lithium metal oxide, the second lithium metal oxide and the third lithium metal oxide are covered with a coating layer, the performance of battery will be further improved. By providing a coating layer, the positive active material has a core-shell structure which includes a lithium metal oxide core and a coating layer covering the core. The coating layer helps to reduce or suppress the side reaction between the lithium metal oxide and the electrolyte, and even when the battery operates in a high-voltage environment, a stable interface can still be formed between the lithium metal oxide and the electrolyte. The dissolution of the transition metal ions of positive electrode active ions and the deficiency of solution are avoided to improve the cycling performance of battery. Additionally, the suppression or reduction of side reaction can also reduce the gas production inside the battery, thus also ensuring the safety of the battery. It should be noted that when at least one of the first lithium metal oxide, the second lithium metal oxide and the third lithium metal oxide is of a core-shell structure, for example, the definition of the masses of the lithium metal oxides of Formula C and Formula D refers to the definition with respect to the whole core-shell structure.

In the present application, there are no limitations on the choice of coating layer material, as long as the side reaction can be suppressed and the lithium ions migrate normally. In order to further improve the lithium ion conductivity, a carbonaceous compound, a fast ionic conductor and other materials may be selected for the coating layer.

In the positive active material of the present application, the first lithium metal oxide and the third lithium metal oxide may be in a monocrystalline morphology or a polycrystalline morphology, and the specific morphology is related to

the choice and proportion of the doping element. Specifically, in the case of polycrystalline morphology, the first lithium metal oxide and the second lithium metal oxide are spherical or spheroid-like particles; and in the case of monocrystalline morphology, the first lithium metal oxide and the second lithium metal oxide may be in the shape of whiskers, flakes, or any other irregular shape.

In the present application, there are no limitations on the preparation method for the positive active material, so long as the first lithium metal oxide, the second lithium metal oxide and the third lithium metal oxide are mixed.

In the present application, there are no limitations on the preparation method for the first lithium metal oxide, and in a specific embodiment, the first lithium metal oxide of the present application may be prepared by mixing a sodium metal oxide represented by Formula 1a or Formula 2a with a lithium compound followed by an ion-exchange treatment.

$Na_{x1}Co_{1-a1-b1}M1_{b1}M2_{a1}O_2$ Formula 1a.

$Na_{x2}Co_{1-a2}M1_{b2}M2_{a1}O_2$ Formula 2a.

In Formula 1a, $0.68 < x1 < 0.74$, $0 < b1 < 0.1$, $0 \leq a < 0.10$, and $0 < b1/1\text{-}a1 < 0.05$; In Formula 2a, $0.68 < x2 < 0.74$, $0 < b2 < 0.02$, and $0 \leq a2 < 0.1$.

The aforementioned ion-exchange treatment is a heat treatment, and specifically, a sodium metal oxide and a lithium compound are mixed and then subjected to a heat treatment at 80°C-300°C for not more than 10 h. After the ion-exchange treatment, the system after the ion-exchange is washed and dried, resulting in lithium metal oxides 1 and 2. Here, the drying is performed at a temperature of 80-180°C for at least 10 h. There are no limitations on the ion-exchange treatment apparatus and the drying apparatus, for example, the ion-exchange treatment apparatus may be a closed vessel apparatus with sealing functionality and stirring capability, or a baking or sintering furnace with heating functionality, such as a wet coating reaction apparatus, a coprecipitation reaction apparatus, a muffle furnace, a box furnace and a tray dryer. The drying apparatus may be a blast drying oven, a vacuum drying oven, a rotary kiln, a tray dryer, a baking oven, etc.

The aforementioned lithium compound may be a lithium source compound commonly used in the art, for example at least one of lithium carbonate, lithium chloride, lithium bromide, lithium iodide, lithium nitrate, lithium hydroxide and lithium fluoride.

Further, when preparing a positive active material with a coating layer covering the outside of a lithium metal oxide, in addition to the raw materials including a sodium metal oxide and a lithium compound, the raw material for the coating layer must also be added during the ion-exchange treatment.

For example, the sodium metal compound represented by Formula 1a or Formula 2a may be prepared by a method including the following procedure:

The cobalt source, the sodium source, the M1 source and the M2 source are mixed at a desired ratio and then calcined to obtain the sodium metal compound represented by Formula 1a or Formula 2a.

Specifically, the calcination treatment is performed at a temperature of 700-900°C for 8-50 h, and the calcination treatment may be performed in an oxygen or air atmosphere. The apparatus for calcination treatment may be, for example, a muffle furnace, a tunnel furnace, a roller kiln, a tube furnace and other high-temperature sintering apparatus.

The mixing of the aforementioned sources may be performed by a high-speed mixing apparatus, a sand milling apparatus, a ball milling apparatus, a plow mixing apparatus, an oblique mixing apparatus, etc. It is to be noted that if a sand milling apparatus or a ball milling apparatus is used and a solvent (water, ethanol or other solvent medium) is added during the sand milling or ball milling, the system needs to be dried after the mixing is complete. Typically, the mixing time is not more than 4 h.

In the present application, there are no limitations on the specific choice of the cobalt source, sodium source, M1 source and M2 source. For example, the cobalt source is selected from one or more of cobalt hydroxide, tricobalt tetraoxide, doped tricobalt tetraoxide, cobaltous oxide, cobalt oxyhydroxide, cobalt nitrate, cobalt sulphate, etc. The sodium source is selected from one or more of sodium carbonate, sodium nitrate, sodium hydroxide, sodium bicarbonate, sodium sulphate, etc. The M1 source may be the oxide of M1, and when M1 is W, the M1 source is, for example, tungstic acid and/or sodium tungstate, etc. When M1 is Te, the M1 source is, for example, telluric acid and/or sodium tellurate, etc. When M1 is Al, the M1 source is, for example, one or more of aluminium sulphate, aluminium nitrate, aluminium hydroxide etc; When M1 is B, the M1 source is, for example, boric acid and/or sodium borate, etc. When M1 is P, the M1 source is, for example, phosphoric acid and/or sodium phosphate, etc. When M1 is K, the M1 source is, for example, one or more of potassium carbonate, potassium nitrate, potassium hydroxide, potassium bicarbonate, potassium sulphate, etc. The M2 source may be the oxide of M2, for example, one or more of basic magnesium carbonate, magnesium hydroxide, zirconium oxide, yttrium oxide, lanthanum oxide, lanthanum fluoride, nickel oxide, niobium oxide, etc.

In the present application, there are no limitations on the preparation method for the second lithium metal oxide, which is a lithium cobaltate material commercially available at present.

In the present application, there are no limitations on the preparation method for the third lithium metal oxide, and the preparation method is similar to that for the first lithium metal oxide, except that the ion-exchange treatment in the third

metal oxide is a heat treatment, and specifically, a sodium metal oxide and a lithium compound are mixed and then subjected to a heat treatment at 80°C-300°C for not more than 10 h, which may be performed in a solution system. After the ion-exchange treatment, the system after the ion-exchange is washed and dried, resulting in a third lithium metal oxide. Here, the drying is performed at a temperature of 80-180°C for at least 10 h.

It should be noted that in an embodiment, when the first lithium metal oxide and the third lithium metal oxide are prepared, the particle size of the metal source raw material may be limited to finally obtaining the first lithium metal oxide and the third lithium metal oxide with a particle size meeting the expected D50.

A second aspect of the present application provides a positive electrode plate, comprising a positive active material described in the first aspect.

Based on the characteristics of the positive active material of the first aspect, the positive electrode plate of the present application helps to improve the cycling performance and capacity of a lithium-ion battery.

**In** the present application, there are no limitations on the specific structure of the positive electrode plate. For example, the positive electrode plate of the present application includes a positive electrode current collector and a positive electrode active layer disposed on at least one surface of the positive electrode current collector, and the positive electrode active layer includes the aforementioned positive active material. It can be noted that, in addition to the positive active material, the positive electrode active layer also includes a conductive agent and a binder. For example, the positive electrode active layer includes, in mass percentage, 70-99 wt% of a positive active material, 0.5-15 wt% of a conducting agent, and 0.5-15 wt% of a binder, further, 80-98 wt% of a positive active material, 1-10 wt% of a conducting agent, and 1-10 wt% of a binder.

There are no special limitations on the choice of the conducting agent and binder, which can be a conventional choice in the art. For example, the conducting agent is selected from at least one of conductive carbon black, acetylene black, Ketjen black, conductive graphite, conductive carbon fibres, carbon nanotubes, single-wall carbon nanotubes, multi-armed carbon nanotubes and carbon fibres, and the binder is selected from at least one of polyvinylidene fluoride (PVDF), polytetrafluoroethylene (PTFE) and lithium polyacrylate (PAALi).

Further, in order to improve the safety, a safety layer can also be provided between the positive electrode active layer and the current collector. The material of the safety layer is typically a non-conductive safety material, for example, an iron-containing compound (such as lithium iron phosphate and lithium phosphate), and an aluminium-containing compound (such as ceramic alumina). Of course, the safety layer also includes a binder, and the ratio of the binder to the safety material may be further determined according to the specific requirements.

In some embodiments of the present application, when the compacted density of the positive electrode active layer is more than or equal to 3.5 g/cm$^3$, such that the cycling performance and capacity of battery can be further improved.

A third aspect of the present application provides a lithium-ion battery, comprising a positive electrode plate of the second aspect mentioned above, and thus has a prominent performance in terms of cycling performance and capacity.

In the present application, there are no limitations on the specific structure of a lithium-ion battery, which may be for example, a prismatic battery or a cylindrical battery. In addition to the positive electrode plate, the lithium-ion battery of the present application further includes a negative electrode plate, a separator and an electrolyte.

For example, the electrolyte is a conventional electrolyte known in the art including a lithium salt and a solvent. The solvent includes ethylene carbonate (abbreviated to EC), diethyl carbonate (abbreviated to DEC), propylene carbonate (abbreviated to PC) and fluoroethylene carbonate (abbreviated to FEC). Further, an additive represented by Formula T is further included, where the content of the additive in the electrolyte is 0.1-10% by mass.

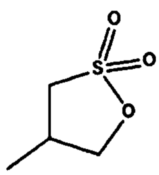

Formula T.

For example, the negative electrode plate includes a negative electrode current collector disposed in a stacking manner and a negative electrode active layer disposed on one or both sides of the negative electrode current collector. In a specific embodiment, the negative electrode active layer includes, in mass percentage, 70-99 wt% of a negative active material, 0.5-15 wt% of a conducting agent, and 0.5-15 wt% of a binder, further, 80-98 wt% of a negative active material, 1-10 wt% of a conducting agent, and 1-10 wt% of a binder. Here, the negative active material is selected from one or more of artificial graphite, natural graphite, hard carbon, mesocarbon microspheres, lithium titanate, silicon carbon and silicon monoxide.

In addition, the negative electrode plate may also be a lithium metal negative electrode comprising a lithium metal, which is conducive to providing more lithium source for battery. In details, when the cobalt molar ratio is 0.73-0.935,

a negative electrode containing lithium metal is preferred.

For example, the separator is a polypropylene-based material, or on the basis of this, an adhesive-coated separator with a ceramic coating on one or both surfaces.

The lithium-ion battery of the present application is suitable for a high-voltage system, and specifically, has excellent energy density and cycling performance at a voltage ≥ 4.50 V. Therefore, the lithium-ion battery of the present application which has good cycling stability and high capacity per gram at a higher voltage such as 4.50 V can meet the requirements of high-end digital products for a light and thin design.

The technical solutions of the present application will be further explained below in conjunction with specific examples.

The preparation method for particles 1-1 of the first lithium metal oxide used in the following examples and comparative examples was as follows.

1) 1.536 kg of a sodium carbonate powder, 1.599 kg of a sodium hydroxide powder, 0.185 kg of a boric acid powder, 0.195 kg of a phosphoric acid powder, 7.625 kg of a tricobalt tetraoxide powder were weighed, put in a high-speed mixing apparatus with the mixing procedure set, mixed at 300 rpm for 3 min, and then mixed at 500 rpm for 5 min and 1,000 rpm for 10 min. Then, the mixed material was taken out, and was considered to be uniformly mixed until it was confirmed that there was no small white spot in the mixed material.

2) About 3 kg of the uniformly-mixed material was taken and uniformly charged into a ceramic crucible in batches, for sintering using a Model VBF-1200X vertical muffle furnace at a high temperature, with the temperature rise curve of the sintering being 5°C/min to 890°C, then the sintering was performed at a constant temperature for 15 h. Then, the sintered sample was cooled to room temperature and taken out, to obtain a sintered cobalt-sodium-containing compound $Na_{0.69}Co_{0.95}B_{0.03}P_{0.02}O_2$.

3) 0.162 kg of lithium chloride particles and 2.114 kg of lithium nitrate particles were weighed first, and the two lithium compounds were respectively added into a mixing vessel. Then, 1 kg of the cobalt-sodium-containing compound $Na_{0.69}Co_{0.95}B_{0.03}P_{0.02}O_2$ synthesized in step 2) was weighed and poured into the mixing vessel for preliminary mixing, and then placed in a muffle furnace for ion-exchange at 280°C for 0.5 h, so as to obtain a crude product.

4) The crude product was suction-filtered and washed with deionized water 3 times, and then dried with a blast drying oven set to 100°C for 8 h, so as to obtain particles 1-1 of the first lithium metal oxide, which correspond to the Chemical Formula $Li_{0.70}Na_{0.009}Co_{0.95}B_{0.03}P_{0.02}O_2$.

FIG. 1A is an SEM image of particles 1-1 of the first lithium metal oxide of the present application, and it can be seen from FIG. 1A that the particle size of the particles 1-1 is 13-20 μm and the actually-measured particle size D50 of the sample is 16.8 μm.

The preparation methods for particles 1-2 and particles 1-3 of the first lithium metal oxide used in the following examples and comparative examples were as follows.

The preparation methods were essentially the same as those for particles 1-1, except that in step 1), different metal sources and different masses of the metal sources were selected, and the specific differences were as shown in Table 1A and Table 2A.

The preparation method for particles 2-1 of the first lithium metal oxide used in the following examples and comparative examples were as follows.

1) 1.536 kg of sodium carbonate powder, 1.599 kg of sodium hydroxide powder, 0.020 kg of potassium carbonate powder, 0.100 kg of magnesium oxide powder and 28.773 kg of cobalt nitrate hexahydrate powder were weighed and placed in a high-speed mixing apparatus with the mixing procedure set, and mixed at 300 rpm for 3 min, and then mixed at 500 rpm for 5 min and 1,000 rpm for 10 min. Then, the mixed material was taken out for inspection, and the mixed material without the presence of small white spots was considered uniform.

2) About 3 kg of the uniformly-mixed material was taken and uniformly charged into a ceramic crucible in batches, for sintering using a Model VBF-1200X vertical muffle furnace at a high temperature, with the temperature rise curve of the sintering being 5°C/min to 800°C, then the sintering was performed at a constant temperature for 15 h. Then, the sintered sample was cooled to room temperature and taken out, to obtain a sintered cobalt-sodium-containing compound $Na_{0.69}K_{0.003}Co_{0.975}Mg_{0.025}O_2$.

3) 0.643 kg of lithium hydroxide monohydrate particles and 1.057 kg of lithium nitrate particles were weighed first, and the two lithium compounds were respectively added into a mixing vessel. Then, 1 kg of the cobalt-sodium-containing compound $Na_{0.69}K_{0.003}Co_{0.975}Mg_{0.025}O_2$ synthesized in step 2) was weighed and poured into the mixing vessel for preliminary mixing, and then placed in a muffle furnace for ion-exchange at 280°C for 0.5 h, so as to obtain a crude product.

4) The crude product was suction-filtered and washed with deionized water 3 times, and then dried with a blast drying oven set to 100°C for 8 h, so as to obtain particles 2-1, which correspond to the Chemical Formula

$Li_{0.698}Na_{0.015}K_{0.003}Co_{0.975}Mg_{0.025}O_2$.

The preparation methods for particles 2-2 and particles 2-3 of the first lithium metal oxide used in the following examples and comparative examples were as follows.

The preparation methods were essentially the same as those for particles 2-1, except that in step 1), different metal sources and different masses of the metal sources were selected, and the specific differences were as shown in Table 1A and Table 2A.

Table 1A

| Particles | Cobalt-soditum-containing compound | $Na_2CO_3$ | $Co(NO_3)_2$ *$6H_2O$ | NaOH | CoO | $Co_3O_4$ | $H_3BO_3$ | $H_3PO_4$ | $K_2CO_3$ | MgO | $TiO_2$ | $Al_2O_3$ | $Y_2O_3$ |
|---|---|---|---|---|---|---|---|---|---|---|---|---|---|
| | | Kg | | | | | | | | | | | |
| 1-1 | $Na_{0.69}Co_{0.95}B_{0.03}P_{0.02}O_2$ | 1.536 | | 1.599 | | 7.625 | 0.185 | 0.195 | | | | | |
| 1-2 | $N_{a0.69}Co_{0.95}B_{0.025}Al_{0.025}O_2$ | 1.006 | 10.186 | 1.999 | | 4.816 | 0.154 | | | | | 0.127 | |
| 1-3 | $Na_{0.69}K_{0.004}Co_{0.97}Y_{0.03}O_2$ | | 2.037 | 2.759 | | 7.224 | | | 0.027 | | | | 0.338 |
| 2-1 | $Na_{0.69}K_{0.003}Co_{0.975}Mg_{0.025}O_2$ | 1.536 | 28.3 77 | 1.599 | | | | | 0.020 | 0.100 | | | |
| 2-2 | $Na_{0.69}K_{0.0035}Co_{0.98}Mg_{0.02}O_2$ | 1.536 | 28.522 | 1.599 | | | | | 0.024 | 0.080 | | | |
| 2-3 | $Na_{0.69}Co_{0.945}Al_{0.035}Ti_{0.02}O_2$ | 7.312 | 17.463 | | 2.585 | | | | 0.020 | | 0.159 | 0.178 | |

Table 2A

| Particles | Lithium metal oxide | Weight of cobalt-sodium-containing compound | LiOH *$H_2O$ | $LiNO_3$ | LiCl | D50/ μm |
|---|---|---|---|---|---|---|
| | | Kg | | | | |
| 1-1 | $Li_{0.70}Na_{0.009}Co_{0.95}B_{0.03}P_{0.02}O_2$ | 1 | | 2.114 | 0.162 | 16.8 |
| 1-2 | $Li_{0.70}Na_{0.012}Co_{0.95}B_{0.025}Al_{0.025}O_2$ | 1 | | 1.585 | 0.325 | 17.3 |
| 1-3 | $Li_{0.698}Na_{0.009}K_{0.004}Co_{0.97}Y_{0.03}O_2$ | 1 | | 2.114 | | 17.1 |
| 2-1 | $Li_{0.698}Na_{0.015}K_{0.003}Co_{0.975}Mg_{0.025}O_2$ | 1 | 0.643 | 1.057 | | 4.9 |
| 2-2 | $Li_{0.695}Na_{0.018}K_{0.0035}Co_{0.98}Mg_{0.02}O_2$ | 1 | 0.482 | 1.321 | | 5.2 |
| 2-3 | $Li_{0.694}Na_{0.013}Co_{0.945}Al_{0.035}Ti_{0.02}O_2$ | 1 | 0.482 | 1.057 | | 5.5 |

The preparation method for particles 3-1 of the second lithium metal oxide used in the following examples and comparative examples (the particles 3-1 have a core-shell structure including a core material and a shell material, where the chemical composition of the core material was $Li_{1.0025}Co_{0.984}Al_{0.012}Mg_{0.002}Y_{0.002}O_2$, the $D_{50}$ of the core material was 5.8 μm, and the material of the shell was $TiO_2$) was as follows.

1) $CoSO_4$, $Al_2(SO_4)_3$ and $Y(NO_3)_2$ were dissolved with deionized water to prepare a mixed salt solution in a molar ratio of Co : Al : Y = 98.4 : 1.2 : 0.2, and the concentration of $Co^{2+}$ in the mixed salt solution was 1.25 mol/L. Concentrated ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 2 times, centrifugal filtration was performed to obtain a co-doped precursor cobalt salt $MeCO_3$ doped with Al and Y.
2) The precursor $MeCO_3$ cobalt salt co-doped with Al and Y in step 1) was stirred and mixed until uniform, and placed in a muffle furnace and sintered for 8 h at 750°C. Then, the sintered product was pulverized to obtain an Al-Y co-doped $Co_3O_4$ precursor with a uniform particle distribution.
3) Lithium carbonate was weighed at a molar ratio of Li : Co = 103 : 100, and magnesium oxide was weighed at a molar ratio of Co : Mg = 98.4 : 0.2 and they were mixed with the Al-Y co-doped $Co_3O_4$ precursor in step 2) under stirring until uniform, and placed in a muffle furnace and sintered for 12 h at 1010°C. Then, the sintered product was pulverized to obtain an Al-Y-Mg co-doped lithium cobaltate $Li_{1.0025}Co_{0.984}Al_{0.012}Mg_{0.002}Y_{0.002}O_2$ which has a uniform distribution of particles with a $D_{50}$ of 5.8 μm.
4) Titanium dioxide was weighed at a molar ratio of Co : Ti = 98.2 : 0.2, and mixed with the lithium cobaltate in step 3) under stirring until uniform, and placed in a muffle furnace and sintered for 12 h at 930°C. Then, the sintered product was pulverized to obtain particles 3-1 which have a core-shell structure, correspond to the Chemical Formula $Li_{1.0025}Co_{0.982}Al_{0.012}Mg_{0.002}Y_{0.002}Ti_{0.002}O_2$, and have a particle size $D_{50}$ of 5.8 μm (the thickness of shell layer was in nano-scale).

The preparation method for particles 3-2 of the second lithium metal oxide used in the following examples and comparative examples (the particles 3-2 have a core-shell structure including a core material and a shell material, where the chemical composition of the core material was $Li_{1.003}Co_{0.983}Al_{0.013}Mg_{0.003}Ti_{0.001}O_2$, the $D_{50}$ of the core material was 4.7 μm, and the material of the shell was $La_2O_3$) was as follows.

1) $CoSO_4$, $Al_2(SO_4)_3$ and $Mg(NO_3)_2$ were dissolved with deionized water to prepare a mixed salt solution at a molar ratio of Co : Al : Mg = 98.3 : 1.3 : 0.3, and the concentration of $Co^{2+}$ in the mixed salt solution was 1.25 mol/L. Concentrated ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the

reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 2 times, centrifugal filtration was performed to obtain a co-doped precursor cobalt salt $MeCO_3$ doped with Al and Mg.

2) The precursor $MeCO_3$ cobalt salt co-doped with Al and Mg in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.

3) Lithium carbonate was weighed at a molar ratio of Li : Co = 103 : 100, and titanium dioxide was weighed, at a molar ratio of Co : Ti = 98.3 : 0.1 and they were mixed with the Al-Mg co-doped $Co_3O_4$ precursor in step 2) under stirring until uniform, and placed in a muffle furnace and sintered for 12 h at 1010°C. Then, the sintered product was pulverized to obtain an Al-Mg-Ti co-doped lithium cobaltate $Li_{1.003}Co_{0.983}Al_{0.013}Mg_{0.003}Ti_{0.001}O_2$ which has a uniform distribution of particles with a $D_{50}$ of 4.7 μm.

4) Dilanthanum trioxide was weighed at a molar ratio of Co : La = 98.1 : 0.2, and mixed with the lithium cobaltate in step 3) under stirring until uniform, and placed in a muffle furnace and sintered for 12 h at 930°C. Then, the sintered product was pulverized to obtain particles 3-2 which have a core-shell structure, correspond to the Chemical Formula $Li_{1.003}Co_{0.981}Al_{0.013}Mg_{0.003}Ti_{0.001}La_{0.002}O_2$, and have a particle size $D_{50}$ of 4.7 μm (the thickness of shell layer was in nano-scale).

The preparation method for particles 4-1 of the second lithium metal oxide used in the following examples and comparative examples (the particles 4-1 have a core-shell structure including a core material and a shell material, where the chemical composition of the core material was $Li_{1.0025}Co_{0.984}Al_{0.012}Mg_{0.002}Y_{0.002}O_2$, the $D_{50}$ of the core material was 17.1 μm, and the material of the shell was $TiO_2$) was as follows.

1) $CoSO_4$, $Al_2(SO_4)_3$ and $Y(NO_3)_2$ were dissolved with deionized water to prepare a mixed salt solution in a molar ratio of Co : Al : Y = 98.4 : 1.2 : 0.2, and the concentration of $Co^{2+}$ in the mixed salt solution was 1.25 mol/L. Concentrated ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 5 times, centrifugal filtration was performed to obtain a co-doped precursor cobalt salt $MeCO_3$ doped with Al and Y.

2) The precursor $MeCO_3$ cobalt salt co-doped with Al and Y in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.

3) Lithium carbonate was weighed at a molar ratio of Li : Co = 103 : 100, and magnesium oxide was weighed, at a molar ratio of Co : Mg = 98.4 : 0.2 and they were mixed with the Al-Y co-doped $Co_3O_4$ precursor in step 2) under stirring until uniform, and placed in a muffle furnace and sintered for 12 h at 1070°C. Then, the sintered product was pulverized to obtain an Al-Y-Mg co-doped lithium cobaltate $Li_{1.0025}Co_{0.984}Al_{0.012}Mg_{0.002}Y_{0.002}O_2$ which has a uniform distribution of particles with a $D_{50}$ of 17.1 μm.

4) Titanium dioxide was weighed at a molar ratio of Co : Ti = 98.2 : 0.2, and mixed with the lithium cobaltate in step 3) under stirring until uniform, and placed in a muffle furnace and sintered for 12 h at 930°C. Then, the sintered product was pulverized to obtain particles 4-1 which have a core-shell structure, correspond to the Chemical Formula $Li_{1.0025}Co_{0.982}Al_{0.012}Mg_{0.002}Y_{0.002}Ti_{0.002}O_2$, and have a particle size $D_{50}$ of 17.1 μm (the thickness of shell layer was in nano-scale).

The preparation method for particles 4-2 of the second lithium metal oxide used in the following examples and comparative examples (the particles 4-2 have a core-shell structure including a core material and a shell material, where the chemical composition of the core material was $Li_{1.0025}Co_{0.983}Al_{0.012}Mg_{0.002}Y_{0.003}O_2$, the $D_{50}$ of the core material was 17.7 μm, and the material of the shell was $TiO_2$) was as follows.

1) $CoSO_4$, $Al_2(SO_4)_3$ and $Y(NO_3)_2$ were dissolved with deionized water to prepare a mixed salt solution in a molar ratio of Co : Al : Y = 98.3 : 1.2 : 0.3, and the concentration of $Co^{2+}$ in the mixed salt solution was 1.25 mol/L. Concentrated

ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 5 times, centrifugal filtration was performed to obtain a co-doped precursor cobalt salt $MeCO_3$ doped with Al and Y.

2) The precursor $MeCO_3$ cobalt salt co-doped with Al and Y in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.

3) Lithium carbonate was weighed at a molar ratio of Li : Co = 103 : 100, and magnesium oxide was weighed, at a molar ratio of Co : Mg = 98.3 : 0.2 and they were mixed with the Al-Y co-doped $Co_3O_4$ precursor in step 2) under stirring until uniform, and placed in a muffle furnace and sintered for 12 h at 1070°C. Then, the sintered product was pulverized to obtain an Al-Y-Mg co-doped lithium cobaltate $Li_{1.0025}Co_{0.9833}Al_{0.012}Mg_{0.002}Y_{0.003}O_2$ which has a uniform distribution of particles with a $D_{50}$ of 17.7 μm.

4) Titanium dioxide was weighed at a molar ratio of Co : Ti = 98.1 : 0.2, and mixed with the lithium cobaltate in step 3) under stirring until uniform, and placed in a muffle furnace and sintered for 12 h at 930°C. Then, the sintered product was pulverized to obtain particles 4-2 which have a core-shell structure, correspond to the Chemical Formula $Li_{1.0025}Co_{0.981}Al_{0.012}Mg_{0.002}Y_{0.003}Ti_{0.002}O_2$, and have a particle size $D_{50}$ of 17.7 μm (the thickness of shell layer was in nano-scale).

Example 1A

The positive active material in this example was prepared according to the following method.

8 g of lithium metal oxide 2-1, 10 g of lithium metal oxide 1-1, 10 g of lithium metal oxide 3-1 and 72 g of lithium metal oxide 4-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out and placed in a muffle furnace and sintered for 30 min at 200°C to obtain the product. The D50 (μm) of the product was measured, and the corresponding results were as shown in Table 5A below.

Examples 2A-16A

The preparation method for the positive active materials in these examples were essentially the same as that in Example 1A, except that: the specific percentages of the selected particles were as shown in Table 3A below. The D50 of the particles was measured, and the corresponding results were as shown in Table 5A and FIG. 2A below. In FIG. 2A, an apparently bimodal distribution can be observed in the particle size distribution graph of Example 6A, where the first peak appears at a particle size of 4-5 μm, and the second peak appears at a particle size of about 16-18 μm. FIG. 3A is an SEM image of Example 6A of the present application. It can be seen from FIG. 3A that the positive active material includes large particles and small particles, the actually-measured D50 was 15.98 μm.

Example 17A

The raw materials of the particles in percentages shown in Table 3A were used, and mixed according to the method in Example 1A. Then, the mixed materials were taken out and placed in the reaction cavity of an ALD reaction apparatus, with the reaction temperature controlled to be 290°C. A lithium source of lithium tert-butoxide, and other precursor materials of trimethyl aluminium, titanium tetrachloride and trimethyl phosphine were introduced to the reaction cavity, using inert nitrogen as a carrier gas (the flow rate was 50 ml/min), followed by atomic layer deposition on the surface of the substance with 150 pulses at intervals, to form a positive active material with an LATP coating layer having a thickness of about 10-12 nm. The D50 of the product was measured, and the corresponding results were as shown in Table 5A below.

Example 18A

The raw materials of the particles in percentages shown in Table 3A were used, and mixed according to the method in Example 1A. Then, the mixed materials were taken out and placed in the reaction cavity of an ALD reaction

apparatus, with the reaction temperature controlled to be 220°C. The precursor materials of trimethyl aluminium and deionized water were introduced to the reaction cavity, using inert nitrogen as a carrier gas (the flow rate was 50 ml/min), followed by atomic layer deposition on the surface of the substance with 150 pulses at intervals, to form a positive active material with an Al2O3 coating layer having a thickness of 10-12 nm. The D50 of the product was measured, and the corresponding results were as shown in Table 5A below.

Example 19A

8 g of lithium metal oxide 2-1, 10 g of lithium metal oxide 1-1, 10 g of lithium metal oxide 3-1, 72 g of lithium metal oxide 4-1 and 0.15 g of a selenium powder of about 20 nm were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was placed in a corresponding VBF-1200X muffle furnace apparatus and sintered at 300° C for 15 min to obtain the corresponding positive active material. The D50 of the product was measured, and the corresponding results were as shown in Table 5A below.

Example 20A

18 g of lithium metal oxide 2-1 and 82 g of lithium metal oxide 3-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out and placed in a muffle furnace and sintered for 30 min at 200°C to obtain the product. The D50 of the product was measured, and the corresponding results were as shown in Table 5A below.

Example 21A

18 g of lithium metal oxide 1-1 and 82 g of lithium metal oxide 4-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out and placed in a muffle furnace and sintered for 30 min at 200°C to obtain the product. The D50 of the product was measured, and the corresponding results were as shown in Table 5A below.

Example 22A

2 g of lithium metal oxide 2-1, 16 g of lithium metal oxide 1-1 and 82 g of lithium metal oxide 4-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out and placed in a muffle furnace and sintered for 30 min at 200°C to obtain the product. The D50 of the product was measured, and the corresponding results were as shown in Table 5A below.

Example 23A

8 g of lithium metal oxide 2-1, 10 g of lithium metal oxide 1-1, 40 g of lithium metal oxide 3-1 and 42 g of lithium metal oxide 4-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out and placed in a muffle furnace and sintered for 30 min at 200°C to obtain the product. The D50 of the product was measured, and the corresponding results were as shown in Table 5A below.

Table 3A

| | Particles | | | | | | | | | |
|---|---|---|---|---|---|---|---|---|---|---|
| | 2-1 | 2-2 | 2-3 | 1-1 | 1-2 | 1-3 | 3-1 | 3-2 | 4-1 | 4-2 |
| | g | | | | | | | | | |
| Example 1A | 8 | | | 10 | | | 10 | | 72 | |
| Example 2A | 10 | | | 10 | | | 10 | | 70 | |
| Example 3A | | | 16 | | | | | | | 84 |
| Example 4A | | | 10 | | | | | | | 90 |

(continued)

| | Particles | | | | | | | | | |
|---|---|---|---|---|---|---|---|---|---|---|
| | 2-1 | 2-2 | 2-3 | 1-1 | 1-2 | 1-3 | 3-1 | 3-2 | 4-1 | 4-2 |
| | g | | | | | | | | | |
| Example 5A | | | 23 | | | | | | | 77 |
| Example 6A | | | | | | 16 | | 20 | | 64 |
| Example 7A | | 17 | | | | | | | 83 | |
| Example 8A | 17 | | | | | | | | 83 | |
| Example 9A | 20 | | | | | | | | 80 | |
| Example 10A | 20 | | | | | | | 15 | 65 | |
| Example 11A | 15 | | | | | | | 20 | 65 | |
| Example 12A | | | | | 18 | | | 20 | | 62 |
| Example 13A | | | | | 18 | | | 35 | | 47 |
| Example 14A | 20 | | | 30 | | | | | 50 | |
| Example 15A | 20 | | | 55 | | | | | 25 | |
| Example 16A | 20 | | | 65 | | | | | 15 | |
| Example 17A | 8 | | | 10 | | | 10 | | 72 | |
| Example 18A | 8 | | | 10 | | | 10 | | 72 | |
| Example 19A | 8 | | | 10 | | | 10 | | 72 | |
| Example 20A | 18 | | | | | | 82 | | | |
| Example 21A | | | | 18 | | | | | 82 | |
| Example 22A | 2 | | | 16 | | | | | 82 | |
| Example 23A | 8 | | | 10 | | | 40 | | 42 | |

Comparative Example 1A

The preparation method for the positive active material in the Comparative Example 1A includes the following steps.

20 g of lithium metal oxide 3-1 and 80 g of lithium metal oxide 4-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform, the mixing was also considered uniform. The mixed material was taken out, placed in a vacuum oven and baking at 100°C for 24 h, and then taken out to obtain the positive active material of Comparative Example 1A. The D50 of the product was measured, and the corresponding results were as shown in Table 5A below.

Comparative Example 2A

The preparation method for the positive active material in the Comparative Example 2A includes the following steps.

20 g of lithium metal oxide 3-2 and 80 g of lithium metal oxide 4-2 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform, the mixing was also considered uniform. The mixed material was taken out, placed in a vacuum oven and baking at 100°C for 24 h, and then taken out to obtain the positive active material of Comparative Example 2A. The D50 of the product was measured, and the corresponding results were as shown in Table 5A below.

The preparation method for particles A-1 of the first lithium metal oxide used in the following examples and comparative examples was as follows.

1) 1.536 kg of a sodium carbonate powder, 1.599 kg of a sodium hydroxide powder, 0.185 kg of a boric acid powder, 0.195 kg of a phosphoric acid powder, 7.625 kg of a tricobalt tetraoxide powder were weighed, put in a high-speed mixing apparatus with the mixing procedure set, mixed at 300 rpm for 3 min, and then mixed at 500 rpm for 5 min and 1,000 rpm for 10 min. Then, the mixed material was taken out, and was considered to be uniformly mixed until it was confirmed that there was no small white spot in the mixed material.
2) About 3 kg of the uniformly-mixed material was taken and uniformly charged into a ceramic crucible in batches, for sintering using a Model VBF-1200X vertical muffle furnace at a high temperature, with the temperature rise curve of the sintering being 5°C/min to 890°C, then the sintering was performed at a constant temperature for 15 h. Then, the sintered sample was cooled to room temperature and taken out, to obtain a sintered cobalt-sodium-containing compound $Na_{0.69}Co_{0.95}B_{0.03}P_{0.02}O_2$.
3) 0.162 kg of lithium chloride particles and 2.114 kg of lithium nitrate particles were weighed first, and the two lithium compounds were respectively added into a mixing vessel. Then, 1 kg of the cobalt-sodium-containing compound $Na_{0.69}Co_{0.95}B_{0.03}P_{0.02}O_2$ synthesized in step 2) was weighed and poured into the mixing vessel for preliminary mixing, and then placed in a muffle furnace for ion-exchange at 280°C for 0.5 h, so as to obtain a crude product.
4) The crude product was suction-filtered and washed with deionized water 3 times, and then dried with a blast drying oven set to 100°C for 8 h, so as to obtain particles A-1 of the first lithium metal oxide, which correspond to the Chemical Formula $Li_{0.70}Na_{0.009}Co_{0.95}B_{0.03}P_{0.02}O_2$.

The preparation method for particles A-2 of the first lithium metal oxide used in the following examples and comparative examples were as follows.

The preparation method for particles A-2 was essentially the same as that for particles A-1, except that in step 1), different metal sources and different masses of the metal sources were selected, and the specific differences were as shown in Table 1B and Table 2B.

The preparation method for particles B-1 of the first lithium metal oxide used in the following examples and comparative examples were as follows:

1) 1.536 kg of sodium carbonate powder, 1.599 kg of sodium hydroxide powder, 0.020 kg of potassium carbonate powder, 0.100 kg of magnesium oxide powder and 28.773 kg of cobalt nitrate hexahydrate powder were weighed and placed in a high-speed mixing apparatus with the mixing procedure set, and mixed at 300 rpm for 3 min, and then mixed at 500 rpm for 5 min and 1,000 rpm for 10 min. Then, the mixed material was taken out for inspection, and the mixed material without the presence of small white spots was considered uniform.
2) About 3 kg of the uniformly-mixed material was taken and uniformly charged into a ceramic crucible in batches, for sintering using a Model VBF-1200X vertical muffle furnace at a high temperature, with the temperature rise curve of the sintering being 5°C/min to 800°C, then the sintering was performed at a constant temperature for 15 h. Then, the sintered sample was cooled to room temperature and taken out, to obtain a sintered cobalt-sodium-containing compound $Na_{0.69}K_{0.003}Co_{0.975}Mg_{0.025}O_2$.
3) 0.643 kg of lithium hydroxide monohydrate particles and 1.057 kg of lithium nitrate particles were weighed first, and the two lithium compounds were respectively added into a mixing vessel. Then, 1 kg of the cobalt-sodium-containing compound $Na_{0.69}K_{0.003}Co_{0.975}Mg_{0.025}O_2$ synthesized in step 2) was weighed and poured into the mixing vessel for preliminary mixing, and then placed in a muffle furnace for ion-exchange at 280°C for 0.5 h, so as to obtain a crude product.
4) The crude product was suction-filtered and washed with deionized water 3 times, and then dried with a blast drying oven set to 100°C for 8 h, so as to obtain particles B-1, which correspond to the Chemical Formula $Li_{0.698}Na_{0.015}K_{0.003}Co_{0.975}Mg_{0.025}O_2$.

FIG. 1B is an XRD pattern of the first lithium metal oxide B-1 of the present application.

The preparation method for particles B-2 of the first lithium metal oxide used in the following examples and comparative examples were as follows.

The preparation method for particles B-2 was essentially the same as that for particles B-1, except that in step 1), different metal sources and different masses of the metal sources were selected, and the specific differences were as shown in Table 1B and Table 2B.

The preparation method for particles C-1 of the second lithium metal oxide used in the following examples and comparative examples (the particles C-1 have a core-shell structure including a core material and a shell material, where the chemical composition of the core material was $Li_{1.0025}Co_{0.984}Al_{0.012}Mg_{0.002}Y_{0.002}O_2$, the $D_{50}$ of the core material was 5.8 μm, and the material of the shell was $TiO_2$) was as follows.

1) $CoSO_4$, $Al_2(SO_4)_3$ and $Y(NO_3)_2$ were dissolved with deionized water to prepare a mixed salt solution in a molar ratio of Co : Al : Y = 98.4 : 1.2 : 0.2, and the concentration of $Co^{2+}$ in the mixed salt solution was 1.25 mol/L. Concentrated

ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 2 times, centrifugal filtration was performed to obtain a co-doped precursor cobalt salt $MeCO_3$ doped with Al and Y.
2) The precursor $MeCO_3$ cobalt salt co-doped with Al and Y in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.
3) Lithium carbonate was weighed at a molar ratio of Li : Co = 103 : 100, and magnesium oxide was weighed, at a molar ratio of Co : Mg = 98.4 : 0.2 and they were mixed with the Al-Y co-doped $Co_3O_4$ precursor in step 2) under stirring until uniform, and placed in a muffle furnace and sintered for 12 h at 1010°C. Then, the sintered product was pulverized to obtain an Al-Y-Mg co-doped lithium cobaltate $Li_{1.0025}Co_{0.984}Al_{0.012}Mg_{0.002}Y_{0.002}O_2$ which has a uniform distribution of particles with a $D_{50}$ of 5.8 μm.
4) Titanium dioxide was weighed at a molar ratio of Co : Ti = 98.2 : 0.2, and mixed with the lithium cobaltate in step 3) under stirring until uniform, and placed in a muffle furnace and sintered for 12 h at 930°C. Then, the sintered product was pulverized to obtain particles C-1 which have a core-shell structure, correspond to the Chemical Formula $Li_{1.0025}Co_{0.982}Al_{0.012}Mg_{0.002}Y_{0.002}Ti_{0.002}O_2$, and have a particle size $D_{50}$ of 5.8 μm (the thickness of shell layer was in nano-scale). FIG. 2B is an XRD pattern of the second lithium metal oxide C-1 of the present application.

The preparation method for particles C-2 of the second lithium metal oxide used in the following examples and comparative examples (the particles C-2 have a core-shell structure including a core material and a shell material, where the chemical composition of the core material was $Li_{1.003}Co_{0.983}Al_{0.013}Mg_{0.003}Ti_{0.001}O_2$, the $D_{50}$ of the core material was 4.7 μm, and the material of the shell was $La_2O_3$) was as follows.

1) $CoSO_4$, $Al_2(SO_4)_3$ and $Mg(NO_3)_2$ were dissolved with deionized water to prepare a mixed salt solution at a molar ratio of Co:Al : Mg = 98.3 : 1.3 : 0.3, and the concentration of $Co^{2+}$ in the mixed salt solution was 1.25 mol/L. Concentrated ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 2 times, centrifugal filtration was performed to obtain a co-doped precursor cobalt salt $MeCO_3$ doped with Al and Mg.
2) The precursor $MeCO_3$ cobalt salt co-doped with Al and Mg in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.
3) Lithium carbonate was weighed at a molar ratio of Li : Co = 103 : 100, and titanium dioxide was weighed, at a molar ratio of Co : Ti = 98.3 : 0.1 and they were mixed with the Al-Mg co-doped $Co_3O_4$ precursor in step 2) under stirring until uniform, and placed in a muffle furnace and sintered for 12 h at 1010°C. Then, the sintered product was pulverized to obtain an Al-Mg-Ti co-doped lithium cobaltate $Li_{1.003}Co_{0.983}Al_{0.013}Mg_{0.003}Ti_{0.001}O_2$ which has a uniform distribution of particles with a $D_{50}$ of 4.7 μm.
4) Dilanthanum trioxide was weighed at a molar ratio of Co : La = 98.1 : 0.2, and mixed with the lithium cobaltate in step 3) under stirring until uniform, and placed in a muffle furnace and sintered for 12 h at 930°C. Then, the sintered product was pulverized to obtain particles C-2 which have a core-shell structure, correspond to the Chemical Formula $Li_{1.003}Co_{0.981}Al_{0.013}Mg_{0.003}Ti_{0.001}La_{0.002}O_2$, and have a particle size $D_{50}$ of 4.7 μm (the thickness of shell layer was in nano-scale).

The preparation method for particles D-1 of the second lithium metal oxide used in the following examples and comparative examples (the particles D-1 have a core-shell structure including a core material and a shell material, where the chemical composition of the core material was $Li_{1.0025}Co_{0.984}Al_{0.012}Mg_{0.002}Y_{0.002}O_2$, the $D_{50}$ of the core material was

17.1 μm, and the material of the shell was $TiO_2$) was as follows.

1) $CoSO_4$, $Al_2(SO_4)_3$ and $Y(NO_3)_2$ were dissolved with deionized water to prepare a mixed salt solution in a molar ratio of Co : Al : Y = 98.4 : 1.2 : 0.2, and the concentration of $Co^{2+}$ in the mixed salt solution was 1.25 mol/L. Concentrated ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 5 times, centrifugal filtration was performed to obtain a co-doped precursor cobalt salt $MeCO_3$ doped with Al and Y.
2) The precursor $MeCO_3$ cobalt salt co-doped with Al and Y in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.
3) Lithium carbonate was weighed at a molar ratio of Li : Co = 103 : 100, and magnesium oxide was weighed, at a molar ratio of Co : Mg = 98.4 : 0.2 and they were mixed with the Al-Y co-doped $Co_3O_4$ precursor in step 2) under stirring until uniform, and placed in a muffle furnace and sintered for 12 h at 1070°C. Then, the sintered product was pulverized to obtain an Al-Y-Mg co-doped lithium cobaltate $Li_{1.0025}Co_{0.984}Al_{0.012}Mg_{0.002}Y_{0.002}O_2$ which has a uniform distribution of particles with a $D_{50}$ of 17.1 μm.
4) Titanium dioxide was weighed at a molar ratio of Co : Ti = 98.2 : 0.2, and mixed with the lithium cobaltate in step 3) under stirring until uniform, and placed in a muffle furnace and sintered for 12 h at 930°C. Then, the sintered product was pulverized to obtain particles D-1 which have a core-shell structure, correspond to the Chemical Formula $Li_{1.0025}Co_{0.982}Al_{0.012}Mg_{0.002}Y_{0.002}Ti_{0.002}O_2$, and have a particle size $D_{50}$ of 17.1 μm (the thickness of shell layer was in nano-scale).

The preparation method for particles D-2 of the second lithium metal oxide used in the following examples and comparative examples (the particles D-2 have a core-shell structure including a core material and a shell material, where the chemical composition of the core material was $Li_{1.0025}Co_{0.983}Al_{0.012}Mg_{0.002}Y_{0.003}O_2$, the $D_{50}$ of the core material was 17.7 μm, and the material of the shell was $TiO_2$) was as follows.

1) $CoSO_4$, $Al_2(SO_4)_3$ and $Y(NO_3)_2$ were dissolved with deionized water to prepare a mixed salt solution in a molar ratio of Co : Al : Y = 98.3 : 1.2 : 0.3, and the concentration of $Co^{2+}$ in the mixed salt solution was 1.25 mol/L. Concentrated ammonia water and distilled water were used at a volume ratio of 1 : 10 to prepare a complexing agent solution. 1.2 mol/L of a sodium carbonate solution was used as a precipitant solution. The precipitant solution was introduced into a reaction kettle to 1/3 of its volume. Under strong stirring and inert gas protection, the aforementioned mixed salt solution, complexing agent solution and precipitant solution were simultaneously introduced into the reaction kettle for reaction, by a parallel flow rate control method. The rate under parallel flow control was not more than 200 L/h with stirring at a speed of not more than 300 rpm, and with the pH of the reaction system being controlled to be 7-9 and the temperature of reaction kettle to be 40-70°C during the reaction. During the reaction, the liquid-phase ion concentrations of the doping elements Al and Co in the reaction system were monitored in real time. After continuous reaction and repeated crystallization 5 times, centrifugal filtration was performed to obtain a co-doped precursor cobalt salt $MeCO_3$ doped with Al and Y.
2) The precursor $MeCO_3$ cobalt salt co-doped with Al and Y in step 1) was stirred and mixed until uniform, and placed in a muffle furnace sintered for 8 h at 750°C. Then, the sintered product was pulverized to obtain an Al-Y co-doped $Co_3O_4$ precursor with a uniform particle distribution.
3) Lithium carbonate was weighed at a molar ratio of Li : Co = 103 : 100, and magnesium oxide was weighed, at a molar ratio of Co : Mg = 98.3 : 0.2 and they were mixed with the Al-Y co-doped $Co_3O_4$ precursor in step 2) under stirring until uniform, and placed in a muffle furnace and sintered for 12 h at 1070°C. Then, the sintered product was pulverized to obtain an Al-Y-Mg co-doped lithium cobaltate $Li_{1.0025}Co_{0.9833}Al_{0.012}Mg_{0.002}Y_{0.003}O_2$ which has a uniform distribution of particles with a $D_{50}$ of 17.7 μm.
4) Titanium dioxide was weighed at a molar ratio of Co : Ti = 98.1 : 0.2, and mixed with the lithium cobaltate in step 3) under stirring until uniform, and placed in a muffle furnace and sintered for 12 h at 930°C. Then, the sintered product was pulverized to obtain particles D-2 which have a core-shell structure, correspond to the Chemical Formula $Li_{1.0025}Co_{0.981}Al_{0.012}Mg_{0.002}Y_{0.003}Ti_{0.002}O_2$, and have a particle size $D_{50}$ of 17.7 μm (the thickness of shell layer was in nano-scale).

The preparation method for particles E-1 of the third lithium metal oxide used in the following examples and comparative examples was as follows.

1) 1.536 kg of sodium carbonate powder, 1.599 kg of sodium hydroxide powder, 0.024 kg of potassium carbonate powder, 0.080 kg of magnesium oxide powder and 28.522 kg of cobalt nitrate hexahydrate powder were weighed and placed in a high-speed mixing apparatus, and mixed at 300 rpm for 3 min, and then mixed at 500 rpm for 5 min and 1,000 rpm for 10 min. Then, the mixed material was taken out for inspection, and the mixed material without the presence of small sodium carbonate white spots was considered uniform.
2) 3 kg of the uniformly-mixed material was charged into a ceramic crucible in batches, for sintering using a Model VBF-1200X vertical muffle furnace at a high temperature, with the temperature rise curve of the sintering being 5°C/min to 750°C, then the sintering was performed at a constant temperature for 10 h. Then, the sintered sample was cooled to room temperature and taken out, to obtain a sintered cobalt-sodium-containing compound $Na_{0.69}K_{0.0035}Co_{0.98}Mg_{0.02}O_2$.
3) 20 L of deionized water, 1.049 kg of lithium hydroxide monohydrate and 1.059 kg of lithium chloride were added to the reaction vessel, and stirred at a water temperature of 78°C at a rotation speed of 20 rpm for 5 min, and then, 1 kg of the cobalt-sodium-containing compound $Na_{0.69}K_{0.0035}Co_{0.98}Mg_{0.02}O_2$ obtained in step 2 was added for continuous reaction at 78°C at a rotation speed of 20 rpm for 18 h.
4) After the completion of the reaction, the reaction product was taken out, suction-filtered and washed with deionized water 3 times, followed by drying in a blast drying oven at 90°C for 8 h of, so as to obtain particles E-1, which correspond to the Chemical Formula $Li_{0.98}Na_{0.03}K_{0.0035}Co_{0.98}Mg_{0.02}O_2$. FIG. 3B is an XRD pattern of the third lithium metal oxide E-1 of the present application.

The preparation method for particles E-2 of the third lithium metal oxide used in the following examples and comparative examples was as follows.

The preparation method for particles E-2 of the third lithium metal oxide was essentially the same as that for particles E-1, except that in step 1), different metal sources and different masses of the metal sources were selected, and the specific differences were as shown in Table 1B and Table 2B.

The preparation method for particles F-1 of the third lithium metal oxide used in the following examples and comparative examples was as follows.

The preparation method for particles F-1 was essentially the same as that for particles E-1, except that in step 1), different metal sources and different masses of metal sources were selected, and in step 2), 3 kg of the uniformly-mixed material was charged into a ceramic crucible in batches, for sintering using a Model VBF-1200X vertical muffle furnace at a high temperature, with the temperature rise curve of the sintering being 5°C/min to 910°C, then the sintering was performed at a constant temperature for 10 h. Then, the sintered sample was cooled to room temperature and taken out, to obtain particles F-1.

The preparation method for particles F-2 of the third lithium metal oxide was essentially the same as that for lithium metal oxide F1, except that in step 1), different metal sources and different masses of the metal sources were selected, and the specific differences were as shown in Table 1B and Table 2B.

Table 1B

| Particles | Cobalt-sodium-containing compound | $Na_2CO_3$ | $Co(NO_3)_2$ *$6H_2O$ | NaOH | CoO | $Co_3O_4$ | $H_3BO_3$ | $H_3PO_4$ | $K_2CO_3$ | MgO | $TiO_2$ | $Al_2O_3$ | $Y_2O_3$ |
|---|---|---|---|---|---|---|---|---|---|---|---|---|---|
| | | Kg | | | | | | | | | | | |
| A-1 | $Na_{0.69}Co_{0.95}B_{0.03}P_{0.02}O_2$ | 1.536 | | 1.599 | | 7.625 | 0.185 | 0.195 | | | | | |
| A-2 | $Na_{0.69}K_{0.004}Co_{0.97}Y_{0.03}O_2$ | | 2.037 | 2.759 | | 7.224 | | | 0.027 | | | | 0.338 |
| B-1 | $Na_{0.69}K_{0.003}Co_{0.975}Mg_{0.025}O_2$ | 1.536 | 28.377 | 1.599 | | | | | 0.020 | 0.100 | | | |
| B-2 | $Na_{0.69}Co_{0.945}Al_{0.035}Ti_{0.02}O_2$ | 7.312 | 17.463 | | 2.585 | | | | 0.020 | | 0.159 | 0.178 | |
| E-1 | $Na_{0.69}K_{0.0035}Co_{0.98}Mg_{0.02}O_2$ | 1.537 | 28.523 | 1.600 | | | | | 0.024 | 0.081 | | | |
| E-2 | $Na_{0.69}Co_{0.94}Al_{0.04}Mg_{0.02}O_2$ | 3.179 | | 0.360 | | | | | | 0.081 | | 0.204 | |
| F-1 | $Na_{0.69}Co_{0.95}B_{0.025}Al_{0.025}O_2$ | 1.007 | 10.187 | 2.000 | | 4.816 | 0.155 | | | | | 0.127 | |
| F-2 | $Na_{0.69}Co_{0.96}B_{0.02}P_{0.02}O_2$ | 0.477 | | 2.400 | | | 0.124 | 0.1959 | | | | | |

Table 2B

| Particles | Lithium metal oxide | Weight of cobalt-sodium-containing compound | LiOH* $H_2O$ | $LiNO_3$ | LiCl | D50/ μm |
|---|---|---|---|---|---|---|
| | | Kg | | | | |
| A-1 | $Li_{0.70}Na_{0.009}Co_{0.95}B_{0.03}P_{0.02}O_2$ | 1 | | 2.114 | 0.162 | 16.8 |
| A-2 | $Li_{0.698}Na_{0.009}K_{0.004}Co_{0.97}Y_{0.03}O_2$ | 1 | | 2.114 | | 17.1 |
| B-1 | $Li_{0.698}Na_{0.015}K_{0.003}Co_{0.975}Mg_{0.025}O_2$ | 1 | 0.643 | 1.057 | | 4.9 |
| B-2 | $Li_{0.694}Na_{0.013}Co_{0.945}Al_{0.035}Ti_{0.02}O_2$ | 1 | 0.482 | 1.057 | | 5.5 |
| E-1 | $Li_{0.98}Na_{0.03}K_{0.0035}Co_{0.98}Mg_{0.02}O_2$ | 1 | 1.049 | | 1.059 | 5.7 |
| E-2 | $Li_{0.975}Na_{0.025}Co_{0.94}Al_{0.04}Mg_{0.02}O_2$ | 1 | 1.049 | | 1.059 | 5.3 |
| F-1 | $Li_{0.97}Na_{0.04}Co_{0.95}B_{0.025}Al_{0.025}O_2$ | 1 | 1.049 | | 1.059 | 17.5 |
| F-2 | $Li_{0.965}Na_{0.043}CO_{0.95}B_{0.025}Al_{0.025}O_2$ | 1 | 1.049 | | 1.059 | 17.6 |

Example 1B

The positive active material in this example was prepared according to the following method.

17 g of particles B-1, 3 g of particles C-1, 70 g of particles D-1 and 10 g of particles F-1 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out, placed in a vacuum oven and baking at 100°C for 24 h, and then taken out to obtain the positive active material of Example 1B. The D50 of the product was measured, and the results were as shown in Table 5B below.

Examples 2B-15B

The preparation method for the positive active materials in examples were essentially the same as that in Example 1B, except that the type and percentage of the selected lithium metal oxide, and the specific of content percentage were as shown in Table 3B below. The D50 was measured, and the results were as shown in FIG. 4B and Table 5B. In FIG. 4B, an apparent bimodal distribution can be observed in the particle size distribution graph of Example 11B, where the first peak appears at a particle size of 4-5 μm, and the second peak appears at a particle size of about 16-18 μm.

Comparative Example 1B

The preparation method for the positive active materials in Comparative Example 1B were essentially the same as that in Example 1B, except that: 20 g of particles B-2 and 80 g of particles D-2 were weighed and placed in a high-speed mixing apparatus with the mixing procedure set, and mixed at 300 rpm for 1 min, then 500 rpm for 2 min and 1,000 rpm for 10 min. Then, the mixed material was taken out and considered uniform. The mixed material was taken out, placed in a vacuum oven and baked at 100°C for 24 h, and then taken out to obtain the positive active material of Comparative Example 1B. The D50 of the product was measured, and the results were as shown in Table 5B below.

Comparative Examples 2B-14B

The preparation methods for the positive active materials in the Comparative Examples 2B-14B were essentially the same as that in Example 1B, except for composition. The specific composition was as shown in Table 3B below. The D50 was measured, and the results were as shown in Table 5B.

Table 3B

| | B-1 | B-2 | A-1 | A-2 | C-1 | C-2 | D-1 | D-2 | E-1 | E-2 | F-1 | F-2 |
|---|---|---|---|---|---|---|---|---|---|---|---|---|
| | g | | | | | | | | | | | |
| Example 1B | 17 | | | | 3 | | 70 | | | | 10 | |
| Example 2B | 17 | | | | 3 | | 60 | | | | 20 | |

(continued)

| | B-1 | B-2 | A-1 | A-2 | C-1 | C-2 | D-1 | D-2 | E-1 | E-2 | F-1 | F-2 |
|---|---|---|---|---|---|---|---|---|---|---|---|---|
| | g | | | | | | | | | | | |
| Example 3B | 17 | | | | 3 | | 60 | | | | 10 | 10 |
| Example 4B | | | 18 | | | 20 | | 50 | | | | 12 |
| Example 5B | | | 18 | | | 10 | | 50 | 10 | | | 12 |
| Example 6B | | | 18 | | | 10 | | 50 | | 10 | | 12 |
| Example 7B | | | 18 | | | 10 | | 20 | 10 | | | 42 |
| Example 8B | | | 18 | | | 20 | | | | | | 62 |
| Example 9B | | | | 18 | | 20 | | 50 | | | | 12 |
| Example 10B | | 10 | 10 | | | 20 | | 50 | | | | 10 |
| Example 11B | | 20 | | | | | | 50 | | | | 30 |
| Example 12B | | 23 | | | | | | 50 | | | | 27 |
| Example 13B | | 23 | | | | | | 70 | | | | 7 |
| Example 14B | | 6 | | | | 14 | | 33 | | | | 47 |
| Example 15B | | 12 | | | | 8 | | 73 | | | | 7 |
| Comparative Example 1B | | 20 | | | | | | 80 | | | | |
| Comparative Example 2B | | | | | | 20 | | 80 | | | | |
| Comparative Example 3B | | | | | | | | 80 | 20 | | | |
| Comparative Example 4B | | 20 | | | | | | | | | | 80 |
| Comparative Example 5B | | 4 | | | | 20 | | 66 | | | | 10 |
| Comparative Example 6B | | 1 | | | | 20 | | 69 | | | | 10 |
| Comparative Example 7B | | 20 | 15 | | | | | 55 | | | | 10 |
| Comparative Example 8B | | | 35 | | | 20 | | 35 | | | | 10 |
| Comparative Example 9B | | | 50 | | | 20 | | 20 | | | | 10 |
| Comparative Example 10B | | 20 | 30 | | | | | 40 | | | | 10 |
| Comparative Example 11B | | 20 | | | | 50 | | | | 30 | | |
| Comparative Example 12B | | | 20 | | | | | 50 | | | | 30 |
| Comparative Example 13B | | 20 | | | | 20 | | 50 | | | | 10 |
| Comparative Example 14B | | 2 | 18 | | | | | 70 | | | | 10 |

Test Example 1

The positive active materials in Examples 1A-23A, Examples 1-15B, Comparative Examples 1A-2A and Comparative Examples 1-14B were subjected to an XRD test, and the related data were shown in FIG. 4A, FIG. 5A, Table 4A, FIG. 5B, FIG. 6B, FIG. 7 and Table 4B. In Table 4A, $2\theta_{peak\,I}$ denotes the 2θ of peak I, and $2\theta_{peak\,II}$ denotes the 20 of peak II. In Table 4B, $I_{002a}$ denotes the intensity of 002a peak, $I_{003}$ denotes the intensity of 003 peak, $I_{003/002a}$ denotes the intensity of 003 peak/the intensity of 002a peak, $2\theta_{002a}$ denotes the 20 of 002a peak, $2\theta_{002b}$ denotes the 2θ of 002b peak, and $2\theta_{003}$ denotes the 2θ of 003 peak.

Test Example 2

The positive active materials in Examples 1A-23A, Examples 1-15B, Comparative Examples 1A-2A, and Comparative Examples 1-14B were respectively made into a positive electrode plate, which was then assembled with a negative electrode plate, an electrolyte and a separator by the following method to obtain a button cell. The method includes the following steps.

Each lithium metal oxide was respectively mixed with conductive carbon black (SP) and PVDF in a weight ratio of 80% : 10% : 10%, and dispersed to obtain a positive electrode slurry. The slurry was applied onto an aluminium foil current collector, and roller-pressed to obtain a positive electrode plate. Then, the positive electrode plate was punched with a die to form a small disk with a diameter of 12 mm, and then dried and weighed. Then, in a glove box under an Ar protective gas, a 2025 button cell case, the Li metal disk used as a negative electrode, and a conventional high-voltage lithium cobaltate electrolyte were assembled into a button cell.

Each of the obtained button cells was left to stand in a normal environment for 4 h, and then tested for a first-time charge-discharge capacity under the following conditions: The cell was charged to 4.55 V at 0.1C, charged to 0.025C at a constant voltage, with the charging stopped, and then left to stand for 3 min, then discharged to 3.0 V at 0.1C. The first-time charge capacity C0 per gram (mAh/g) and the first-time discharge capacity D0 per gram (mAh/g) under 4.4-4.55 V were recorded respectively. The initial efficiency was calculated. The results were shown in Tables 5A and 5B. FIG. 6A is a charge-discharge curve of a button cell obtained by assembling the positive active material in Example 1A of the present application. FIG. 8 is a charge-discharge curve of a button cell obtained by assembling the positive active material in Example 3B of the present application.

Test Example 3

The positive active materials in Examples 1A-23A, Examples 1-15B, Comparative Examples 1A-2A, and Comparative Examples 1-14B were made into a positive electrode plate, which was then assembled with a negative electrode plate, an electrolyte and a separator by the following method to obtain a lithium-ion battery. The method includes the following steps.

1) The positive active materials in examples and comparative examples were respectively mixed with conductive carbon black and PVDF in a weight ratio of 96% : 2% : 2%, and dispersed to obtain a positive electrode slurry. The slurry was applied onto an aluminium foil current collector, and roller-pressed so that the compacted density of positive electrode was 4.12 g/$cm^3$, so as to obtain a positive electrode plate.

2-1) Artificial graphite, styrene-butadiene rubber (SBR), sodium carboxymethyl cellulose, and conductive carbon black were mixed in a weight ratio of 94% : 3% : 2% : 1%, and the mixture was dispersed in water, mixed using a dual planetary mixing machine to obtain the negative electrode slurry. The slurry was applied onto a copper current collector, roller-pressed and dried, to obtain the negative electrode plates of Examples 1A-13A, Examples 17A-23A, Examples 1-15B, Comparative Examples 1A-2A and Comparative Examples 1-14B;

2-2) Artificial graphite, styrene-butadiene rubber (SBR), sodium carboxymethyl cellulose, and conductive carbon black were mixed in a weight ratio of 94% : 3% : 2% : 1%, and the mixture was dispersed in water, mixed using a dual planetary mixing machine to obtain the negative electrode slurry. The slurry was applied onto a copper current collector, roller-pressed and dried.

Then, a lithium foil with an areal density of 0.0728 mg/$cm^2$ was laminated on the surface of the negative electrode active layer by rolling, to obtain the negative electrode plate of Example 14A. A lithium foil with an areal density of 0.1139 mg/$cm^2$ was laminated on the surface of the negative electrode active layer by rolling, to obtain the negative electrode plate of Example 15A. A lithium foil with an areal density of 0.1301 mg/$cm^2$ was laminated on the surface of the negative electrode active layer by rolling, to obtain the negative electrode plate of Example 16A.

3) The positive electrode plate, negative electrode plate and a separator were assembled into a lithium-ion battery, and a non-aqueous electrolyte was injected.

Here, the electrolyte was a conventional electrolyte known in the art. Ethylene carbonate (abbreviated to EC): diethyl carbonate (abbreviated to DEC): and propylene carbonate (abbreviated to PC) were mixed in a mass ratio of 2 : 5 : 3, and then fluoroethylene carbonate (abbreviated to FEC), lithium hexafluorophosphate (abbreviated to $LiPF_6$) and an additive represented in Formula T, which respectively account for 5%, 13% and 2% of the total mass of electrolyte, were added.

The capacity retention of the resulting lithium-ion batteries were tested, and the specific method for the test was as follows: at 25°C, the battery was charged to 4.50 V at a charge rate of 1C at a constant current, and then charged to 4.50 V at a charge rate of 0.05C at a constant voltage, and then discharged to 3.0 V at a discharge rate of 1C. Such a cycle of charge and discharge was repeated 500 times, and the discharge capacity of the first cycle and the discharge capacity of the 500th cycle were determined, and the capacity retention Q2 after 500 cycles was calculated using the following formula. The results were shown in Table 5A and Table 5B.

Capacity retention Q2 = (discharge capacity of the 500th cycle)/(discharge capacity of the first cycle) * 100%

Test Example 4

The uncycled (formed) lithium-ion battery in Test Example 3 was discharged to 3.0 V at a 1/10 current of the nominal capacity, and found, through a voltage test, to have a voltage of 3.0-3.6 V. Then, the lithium-ion battery was disassembled, and the positive electrode plate was taken out, soaked in dimethyl carbonate (DMC) for 3 h, naturally dried in a drying room, and then placed in a muffle furnace and calcined for 3 h at 300°C, and then sieved at 200 mesh to obtain a sample powder. Then, an ICP is used to measure the content of Li element and Co element in the Examples and Comparative Examples and obtain the lithium-cobalt molar ratio. The results were shown by n1 in Table 5A and the n in Table 5B.

The content of Li element and Co element of the positive active materials in the Examples and Comparative Examples were measured through the same method to obtain an initial lithium-cobalt molar ratio, and the results were shown by the n2 in Table 5A and the $n_{initial}$ in Table 5B.

Table 4A

| | $2\theta_{peak\ I}$ | $2\theta_{peak\ II}$ | $2\theta_{oeak\ II}$-$2\theta_{peak\ I}$ |
|---|---|---|---|
| Example 1A | 17.911 | 18.9089 | 0.9979 |
| Example 2A | 17.911 | 18.922 | 1.011 |
| Example 3A | 17.9897 | 18.9876 | 0.9979 |
| Example 4A | 18.1211 | 19.1452 | 1.0241 |
| Example 5A | 18.0685 | 19.0927 | 1.0242 |
| Example 6A | 18.0948 | 19.1189 | 1.0241 |
| Example 7A | 17.9635 | 18.9614 | 0.9979 |
| Example 8A | 18.0029 | 19.027 | 1.0241 |
| Example 9A | 18.0029 | 19.0008 | 0.9979 |
| Example 10A | 17.9897 | 19.0139 | 1.0242 |
| Example 11A | 18.0423 | 19.0553 | 1.013 |
| Example 12A | 18.0554 | 19.0927 | 1.0373 |
| Example 13A | 18.1079 | 19.1452 | 1.0373 |
| Example 14A | 17.9241 | 18.922 | 0.9979 |
| Example 15A | 17.9372 | 18.922 | 0.9848 |
| Example 16A | 17.911 | 18.9089 | 0.9979 |
| Example 17A | 17.9897 | 18.9876 | 0.9979 |
| Example 18A | 18.0029 | 18.9614 | 0.9585 |
| Example 19A | 18.0685 | 19.0139 | 0.9454 |
| Example 20A | 17.9897 | 18.922 | 0.9323 |
| Example 21A | 18.0685 | 19.0139 | 0.9454 |
| Example 22A | 18.0029 | 18.9876 | 0.9847 |
| Example 23A | 17.9241 | 18.9089 | 0.9848 |
| Comparative Example 1A | / | 18.922 | / |
| Comparative Example 2A | / | 18.9876 | / |

Table 5A

| | C0 | D0 | Initial efficiency | Q2 | D50 | n2 | n1 |
|---|---|---|---|---|---|---|---|
| Example 1A | 197.06 | 197.48 | 100.21% | 90.12% | 16.24 | 0.9461 | 0.9225 |
| Example 2A | 196 | 198 | 101.02% | 90.71% | 15.91 | 0.9452 | 0.9163 |

(continued)

| | C0 | D0 | Initial efficiency | Q2 | D50 | n2 | n1 |
|---|---|---|---|---|---|---|---|
| Example 3A | 199.36 | 197.32 | 98.98% | 90.68% | 16.45 | 0.9528 | 0.9285 |
| Example 4A | 200.44 | 196.78 | 98.17% | 89.97% | 16.87 | 0.9582 | 0.934 |
| Example 5A | 195.58 | 199.21 | 101.86% | 89.79% | 15.78 | 0.9313 | 0.9073 |
| Example 6A | 198.64 | 197.04 | 99.19% | 90.34% | 15.98 | 0.9523 | 0.9283 |
| Example 7A | 198.16 | 197.59 | 99.71% | 90.44% | 16.5 | 0.949 | 0.9253 |
| Example 8A | 197.99 | 197.42 | 99.71% | 90.51% | 16.61 | 0.9493 | 0.9259 |
| Example 9A | 196.4 | 198.2 | 100.92% | 89.64% | 15.76 | 0.9414 | 0.9164 |
| Example 10A | 196.25 | 198.35 | 101.07% | 88.96% | 15.14 | 0.942 | 0.9169 |
| Example 11A | 198.85 | 197.1 | 99.12% | 88.75% | 15.21 | 0.9553 | 0.9314 |
| Example 12A | 197.52 | 197.52 | 100.00% | 90.64% | 16.03 | 0.9464 | 0.9222 |
| Example 13A | 197.22 | 197.67 | 100.23% | 88.53% | 14.97 | 0.9467 | 0.9228 |
| Example 14A | 179.6 | 205.1 | 114.20% | 89.13% | 16.27 | 0.8497 | 0.9104 |
| Example 15A | 165.6 | 210.85 | 127.32% | 88.94% | 15.99 | 0.7749 | 0.9089 |
| Example 16A | 160 | 213.15 | 133.22% | 89.07% | 16.06 | 0.7445 | 0.9048 |
| Example 17A | 197.46 | 198.37 | 100.46% | 91.35% | 16.73 | 0.9496 | 0.9231 |
| Example 18A | 198.23 | 199.41 | 100.60% | 91.93% | 16.49 | 0.9459 | 0.9218 |
| Example 19A | 198.96 | 199.84 | 100.44% | 92.08% | 16.87 | 0.9455 | 0.9223 |
| Example 20A | 196.64 | 198.5 | 100.95% | 86.19% | 5.42 | 0.9458 | 0.9231 |
| Example 21A | 196.92 | 197.14 | 100.11% | 85.97% | 19.98 | 0.9455 | 0.9223 |
| Example 22A | 196.98 | 197.2 | 100.11% | 86.45% | 18.27 | 0.9463 | 0.9227 |
| Example 23A | 196.76 | 197.78 | 100.52% | 86.36% | 10.93 | 0.945 | 0.9218 |
| Comparative Example 1A | 206.8 | 193.2 | 93.42% | 83.62% | 16.08 | 1.0021 | 0.9104 |
| Comparative Example 2A | 207.6 | 193.2 | 93.06% | 83.28% | 15.93 | 1.0029 | 0.9132 |

Table 4B

| | $I_{002a}$ | $I_{003}$ | $I_{003/002a}$ | $2\theta_{002a}$ | $2\theta_{002b}$ | $2\theta_{003}$ | $2\theta_{002b}$-$2\theta_{002a}$ | $2\theta_{003}$-$2\theta_{002b}$ |
|---|---|---|---|---|---|---|---|---|
| Example 1B | 4236 | 10423 | 2.46 | 17.9372 | 18.5543 | 18.9089 | 0.6171 | 0.3546 |
| Example 2B | 3649 | 10156 | 2.78 | 17.9241 | 18.5675 | 18.922 | 0.6434 | 0.3545 |
| Example 3B | 6102 | 16742 | 2.74 | 17.8978 | 18.5412 | 18.8826 | 0.6434 | 0.3414 |
| Example 4B | 5863 | 13077 | 2.23 | 17.9241 | 18.5806 | 19.1189 | 0.6565 | 0.5383 |
| Example 5B | 4791 | 9733 | 2.03 | 17.8978 | 18.5412 | 19.0927 | 0.6434 | 0.5515 |
| Example 6B | 6425 | 14460 | 2.25 | 17.9372 | 18.6069 | 19.1189 | 0.6697 | 0.512 |
| Example 7B | 6733 | 15603 | 2.32 | 17.8847 | 18.5937 | 18.9614 | 0.709 | 0.3677 |
| Example 8B | 3875 | 9094 | 2.35 | 17.911 | 18.62 | 19.1189 | 0.709 | 0.4989 |
| Example 9B | 4523 | 10212 | 2.26 | 17.9372 | 18.5806 | 18.8826 | 0.6434 | 0.302 |
| Example 10B | 25792 | 87600 | 3.40 | 17.8978 | 18.5412 | 18.8826 | 0.6434 | 0.3414 |
| Example 11B | 27156 | 88795 | 3.27 | 17.9241 | 18.5675 | 18.8957 | 0.6434 | 0.3282 |
| Example 12B | 28167 | 101210 | 3.59 | 17.8978 | 18.5806 | 19.0927 | 0.6828 | 0.5121 |
| Example 13B | 26153 | 110295 | 4.22 | 17.911 | 18.5412 | 19.0008 | 0.6302 | 0.4596 |

(continued)

| | $I_{002a}$ | $I_{003}$ | $I_{003/002a}$ | $2\theta_{002a}$ | $2\theta_{002b}$ | $2\theta_{003}$ | $2\theta_{002b}$-$2\theta_{002a}$ | $2\theta_{003}$-$2\theta_{002b}$ |
|---|---|---|---|---|---|---|---|---|
| Example 14B | 2573 | 17301 | 6.72 | 17.9372 | 18.62 | 19.0927 | 0.6828 | 0.4727 |
| Example 15B | 3172 | 16908 | 5.33 | 17.8847 | 18.5806 | 18.922 | 0.6959 | 0.3414 |
| Comparative Example 1B | 9182 | 30251 | 3.29 | 17.911 | / | 18.9089 | / | / |
| Comparative Example 2B | / | 16283 | / | / | / | 18.9089 | / | / |
| Comparative Example 3B | / | 18294 | / | / | 18.5675 | 18.8957 | / | / |
| Comparative Example 4B | 8905 | / | / | 17.8978 | 18.5806 | / | / | / |
| Comparative Example 5B | 2367 | 17649 | 7.45 | 17.8978 | 18.5675 | 18.9089 | 0.6697 | 0.3414 |
| Comparative Example 6B | 1853 | 29983 | 16.18 | 17.911 | 18.5675 | 19.1189 | 0.6565 | 0.5514 |
| Comparative Example 7B | 4528 | 4896 | 1.08 | 17.9372 | 18.5806 | 19.0927 | 0.6434 | 0.5121 |
| Comparative Example 8B | 4985 | 5892 | 1.18 | 17.9241 | 18.5412 | 18.9614 | 0.6171 | 0.4202 |
| Comparative Example 9B | 6543 | 4872 | 0.74 | 17.8978 | 18.6069 | 19.1189 | 0.7091 | 0.512 |
| Comparative Example 10B | 7328 | 5084 | 0.69 | 17.9241 | 18.5937 | 19.0927 | 0.6696 | 0.499 |
| Comparative Example 11B | 3283 | 9928 | 3.02 | 17.8978 | 18.5412 | 18.8826 | 0.6434 | 0.3414 |
| Comparative Example 12B | 3189 | 9316 | 2.92 | 17.9372 | 18.5806 | 19.0008 | 0.6434 | 0.4202 |
| Comparative Example 13B | 2637 | 8126 | 3.08 | 17.9241 | 18.5806 | 19.0927 | 0.6565 | 0.5121 |
| Comparative Example 14B | 2872 | 8275 | 2.88 | 17.8978 | 18.5412 | 19.0008 | 0.6434 | 0.4596 |

Table 5B

| | C0/mAh/g. | D0 /mAh/g. | Initial efficiency/ % | Q2/% | D50/μm | $n_{initial}$ | n |
|---|---|---|---|---|---|---|---|
| Example 1B | 198.66 | 198.85 | 100.10 | 90.73 | 15.94 | 0.9460 | 0.9202 |
| Example 2B | 199.36 | 200.25 | 100.45 | 90.98 | 15.67 | 0.9430 | 0.9173 |
| Example 3B | 199.26 | 200.15 | 100.45 | 90.61 | 15.93 | 0.9425 | 0.9163 |
| Example 4B | 197.94 | 198.9 | 100.48 | 90.97 | 15.98 | 0.9418 | 0.9156 |
| Example 5B | 199.14 | 200.5 | 100.68 | 90.45 | 15.85 | 0.9398 | 0.9136 |
| Example 6B | 199.04 | 200.6 | 100.78 | 90.72 | 15.97 | 0.9395 | 0.9135 |
| Example 7B | 200.64 | 204.4 | 101.87 | 90.66 | 16.03 | 0.9293 | 0.903 |
| Example 8B | 200.44 | 205.4 | 102.47 | 89.95 | 16.01 | 0.9243 | 0.8981 |
| Example 9B | 198.12 | 199.08 | 100.48 | 90.99 | 16.11 | 0.9418 | 0.9156 |
| Example 10B | 197 | 199.5 | 101.27 | 90.35 | 14.97 | 0.9365 | 0.9103 |

(continued)

| | C0/mAh/g. | D0 /mAh/g. | Initial efficiency/ % | Q2/% | D50/μm | $n_{initial}$ | n |
|---|---|---|---|---|---|---|---|
| Example 11B | 198.7 | 202.3 | 101.81 | 90.14 | 16.00 | 0.9295 | 0.9032 |
| Example 12B | 196.93 | 202.72 | 102.94 | 89.25 | 15.26 | 0.9216 | 0.8951 |
| Example 13B | 195.93 | 200.12 | 102.14 | 89.47 | 15.31 | 0.9286 | 0.9024 |
| Example 14B | 206.83 | 200.87 | 97.12 | 89.13 | 16.08 | 0.9654 | 0.9395 |
| Example 15B | 201.71 | 197.23 | 97.78 | 89.36 | 16.1 | 0.9616 | 0.9355 |
| Comparative Example 1B | 197.2 | 198.4 | 100.61 | 88.23 | 15.88 | 0.9400 | 0.9142 |
| Comparative Example 2B | 207.6 | 193.2 | 93.06 | 83.37 | 15.79 | 1.0000 | 0.9741 |
| Comparative Example 3B | 210 | 196.4 | 93.52 | 87.15 | 16.06 | 0.9960 | 0.9704 |
| Comparative Example 4B | 201.2 | 208.8 | 103.78 | 86.73 | 15.99 | 0.9120 | 0.8867 |
| Comparative Example 5B | 205.94 | 195.58 | 94.97 | 86.47 | 15.17 | 0.9845 | 0.9585 |
| Comparative Example 6B | 207.56 | 194.77 | 93.84 | 83.94 | 15.87 | 0.9935 | 0.9668 |
| Comparative Example 7B | 189.15 | 203.15 | 107.40 | 81.83 | 16.07 | 0.8916 | 0.8624 |
| Comparative Example 8B | 188.15 | 202.55 | 107.65 | 81.07 | 16.03 | 0.8922 | 0.8619 |
| Comparative Example 9B | 179.6 | 206 | 114.70 | 79.03 | 16.12 | 0.8475 | 0.8364 |
| Comparative Example 10B | 180.6 | 206.6 | 114.40 | 78.67 | 16.15 | 0.8481 | 0.8379 |
| Comparative Example 11B | 198.9 | 204.3 | 102.71 | 87.84 | 5.02 | 0.9327 | 0.9058 |
| Comparative Example 12B | 198.1 | 201.5 | 101.72 | 87.26 | 18.89 | 0.9291 | 0.9036 |
| Comparative Example 13B | 197.3 | 199.9 | 101.32 | 88.03 | 11.57 | 0.9358 | 0.9104 |
| Comparative Example 14B | 197.16 | 198.98 | 100.92 | 88.12 | 18.65 | 0.9360 | 0.9103 |

It can be seen from Table 5A and Table 5B that: the positive active material of the present application facilitates the improvement of the discharge capacity and cycling performance of a lithium-ion battery.

It should be finally noted that the foregoing examples are merely used for illustrating rather than limiting the technical solutions of the present application. Although the present application has been illustrated in details with reference to the foregoing examples, it should be understood by those of ordinary skill in the art that the technical solutions described in the foregoing examples may still be modified, or some or all of the technical features thereof may be equivalently substituted; and these modifications or substitutions do not make the essence of the corresponding technical solutions depart from the scope of the technical solutions in the examples of the present application.

## Claims

1. A positive active material, wherein an X-ray diffraction pattern of the positive active material has a peak I and a peak II with 2θ of 17.8°-19.5°.

2. The positive active material according to claim 1, wherein the difference in 2θ between peak II and peak I is 0.92°-1.12°; and
the lithium-cobalt molar ratio of the positive active material is 0.73-0.99.

3. The positive active material according to claim 1 or 2, wherein the lithium-cobalt molar ratio of the positive active material is 0.85-0.95.

4. The positive active material according to any one of claims 1-3, wherein the positive active material has a D50 of 12-18 μm.

5. The positive active material according to any one of claims 1-4, wherein the positive active material comprises first particles and second particles, the first particles have a D50 of 3-8 μm, and the second particles have a D50 of 13-20

μm.

6. The positive active material according to claim 5, wherein

$$5\% \leqslant m1/(m1 + m2) \leqslant 35\% \qquad \text{Formula A;}$$

wherein m1 is the mass of the first particles, and m2 is the mass of the second particles.

7. The positive active material according to claim 5 or 6, wherein

$$15\% \leq m1/(m_1 + m_2) \leq 30\% \qquad \text{Formula B.}$$

8. The positive active material according to any one of claims 1-7, wherein at least a part of the outer surface of the positive active material is covered by a coating layer.

9. The positive active material according to claim 8, wherein the coating layer at least comprises at least one of a lithium element, an oxygen element and a selenium element.

10. The positive active material according to claim 1, wherein the X-ray diffraction pattern of the positive active material further has a peak III with a 20 of 17.8°-19.5°.

11. The positive active material according to claim 10, wherein the positive active material comprises a first lithium metal oxide represented by Formula 1 and/or Formula 2, a second lithium metal oxide represented by Formula 3, and a third lithium metal oxide represented by Formula 4;

the first lithium metal oxide belongs to the orthorhombic crystal system and has a Cmca space group, and has a 002a peak with a 20 of 17.8°-18.2° in the X-ray diffraction pattern;
the second lithium metal oxide belongs to the rhombohedral crystal system and has an R3-m space group, and has a 003 peak with a 20 of 18.7°-19.2° in an X-ray diffraction pattern;
the third lithium metal oxide has a P63mc space group, and has a 002b peak with a 20 of 18.4°-18.65° in an X-ray diffraction pattern;

$$Li_{n1-y1}Na_{y1}Co_{1-a1-b1}M1_{b1}M2_{a1}O_2 \qquad \text{Formula 1;}$$

$$Li_{n2-y2-b2}Na_{y2}Co_{1-a2}M1_{b2}M2_{a2}O_2 \qquad \text{Formula 2;}$$

in Formula 1, $0.6 \leq n1 \leq 0.8$, $0 < y1 \leq 0.05$, $0 \leq a1 \leq 0.1$, $0 < b1 \leq 0.1$, and $0 < bl/1\text{-}al\text{-}bl < 0.1$; in Formula 2, $0.6 \leq n2 \leq 0.8$, $0 < y2 \leq 0.05$, $0 \leq a2 \leq 0.1$, and $0 < b2 \leq 0.02$; in Formula 1 and Formula 2, M1 is selected from at least one of Te, W, Al, B, P and K; M2 is a doping element different from M1;

$$Li_{x3}Me_{1-y3}M_{y3}O_2\text{, wherein } Me=Co_{1-a3-b3}Al_{a3}Z_{b3} \qquad \text{Formula 3;}$$

in Formula 3, M is one or more of Al, Mg, Ti, Zr, Co, Ni, Mn, Y, La, Sr, W and Sc, and Z is one or more of Y, La, Mg, Ti, Zr, Ni, Mn and Ce; $0.95 \leq x3 \leq 1.03$, $0 \leq y3 \leq 0.1$, $0 < a3 \leq 0.2$, and $0 < b3 \leq 0.1$;

$$Li_{m-x4-y5}Na_{x4}Co_{1-y1}M3_{y4}M4_{y5}O_2, \qquad \text{Formula 4;}$$

in Formula 4, $0.95 \leq m \leq 1.03$, $0 < x4 \leq 0.05$, $0 \leq y4$, and $y5 \leq 0.15$, and M3 and M4 are each independently selected from one or more of Al, Mg, Ti, Zr, Ni, Mn, Y, La, Sr, W, Sc, Ce, P, Nb, V, Ta, Te, B and K;
the positive active material has a D50 of 12-18 μm.

**12.** The positive active material according to claim 11, wherein the lithium-cobalt molar ratio of the positive active material is 0.87-0.95.

**13.** The positive active material according to claim 11 or 12, wherein the ratio of the mass of the first lithium metal oxide to the total mass of the lithium metal oxide is 5-25%;
wherein the total mass of the lithium metal oxide is the total mass of the first lithium metal oxide, the second lithium metal oxide and the third lithium metal oxide.

**14.** The positive active material according to claim 13, wherein the ratio of the mass of the first lithium metal oxide to the total mass of the lithium metal oxide is 14-20%.

**15.** The positive active material according to any one of claims 11-14, wherein the first lithium metal oxide comprises particles A and/or particles B, the particles A have a D50 of 13-20 μm, and the particles B have a D50 of 3-8 μm;

the second lithium metal oxide comprises particles C and/or particles D, the particles C have a D50 of 3-8 μm, and the particles D have a D50 of 13-20 μm;
the third lithium metal oxide comprises particles E and/or particles F, the particles E have a D50 of 3-8 μm, and the particles F have a D50 of 13-20 μm;
wherein the positive active material comprises at least one of the particles A, particles D and particles F, and comprises at least one of the particles B, particles C and particles E.

**16.** The positive active material according to claim 15, wherein

$$5\% \leq (m_B+m_C+m_E)/(m_A+m_B+m_C+m_D+m_E+m_F) \leq 35\% \qquad \text{Formula C;}$$

$m_A$, $m_B$, $m_C$, $m_D$, $m_E$ and $m_F$ are the masses of the particles A, particles B, particles C, particles D, particles E and particles F, and at least one of $m_B$, $m_C$ and $m_E$ is greater than 0.=

**17.** The positive active material according to claim 16, wherein

$$15\% \leq (m_B+m_C+m_E)/(m_A+m_B+m_C+m_D+m_E+m_F) \leq 30\% \qquad \text{Formula D.}$$

**18.** The positive active material according to any one of claims 1-17, wherein a volumetric particle size distribution curve of the positive active material is a bimodal distribution curve.

**19.** A positive electrode plate, wherein the positive electrode plate comprises a positive active material according to any one of claims 1-18.

**20.** A battery, wherein the battery comprises a positive electrode material according to any one of claims 1-18 and/or a positive electrode plate according to claim 19.

**21.** The battery according to claim 20, wherein a negative electrode plate of the battery comprises a lithium metal.

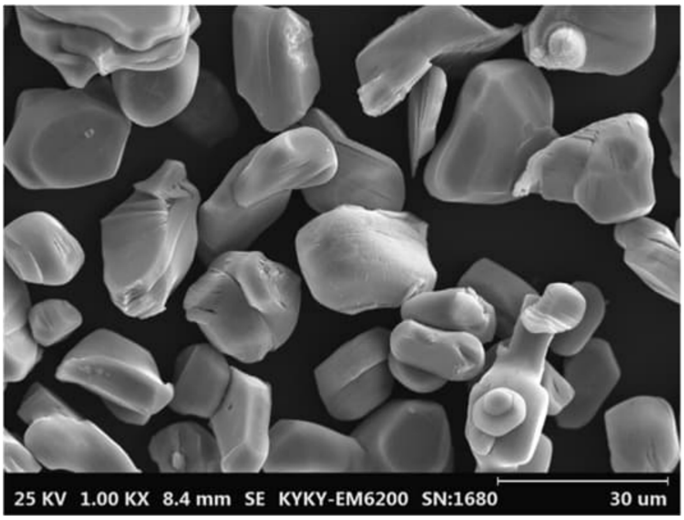
25 KV 1.00 KX 8.4 mm SE KYKY-EM6200 SN:1680
30 um

FIG. 1A

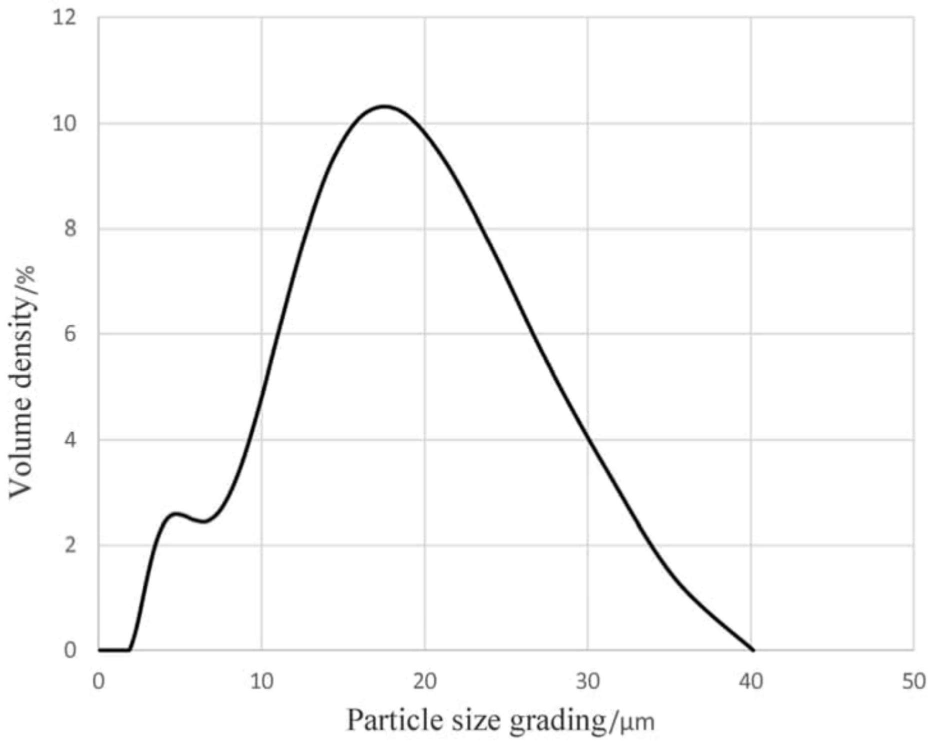
12
10
8
6
4
2
0
Volume density/%
0
10
20
30
40
50
Particle size grading/μm

FIG. 2A

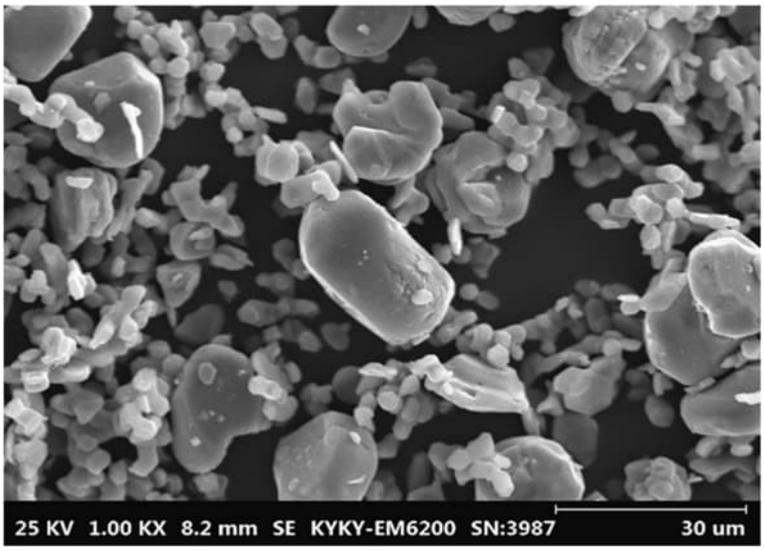


FIG. 3A

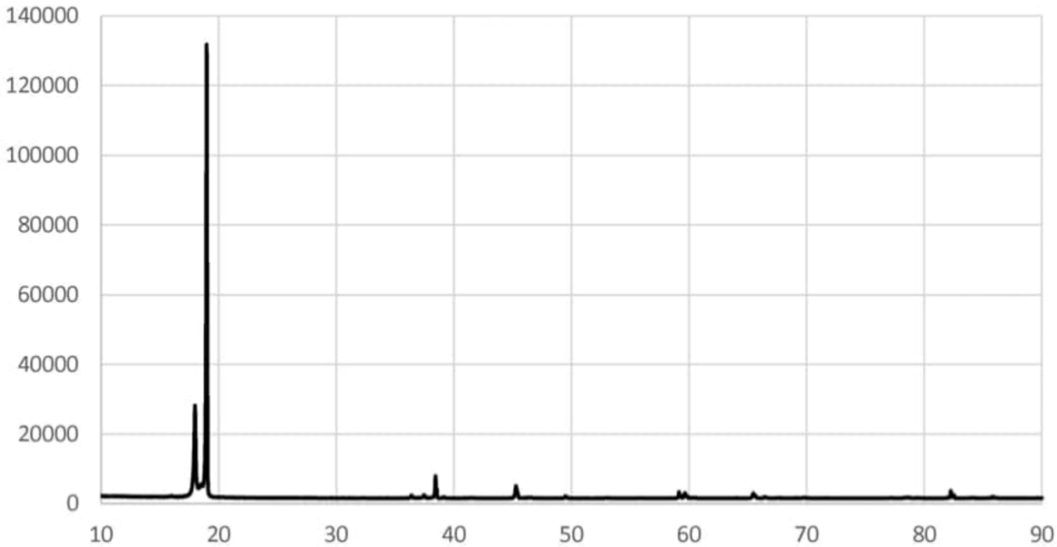


FIG. 4A

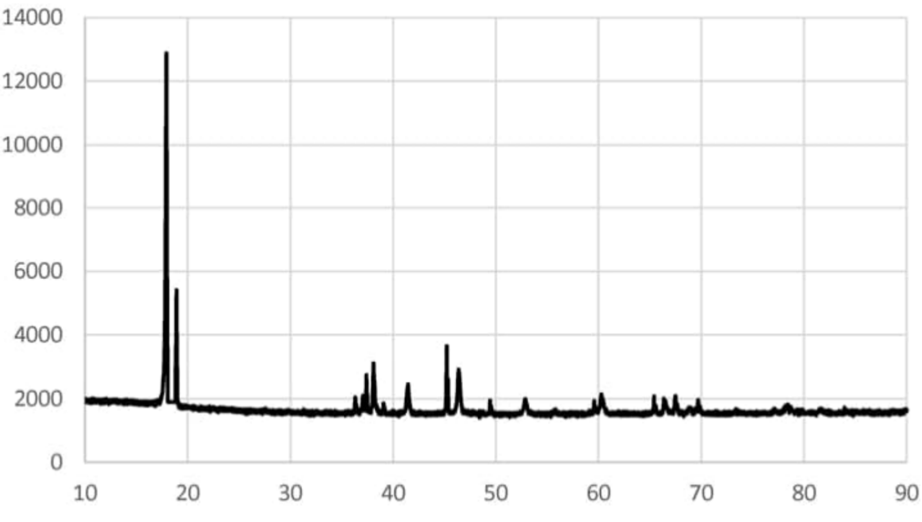


FIG. 5A

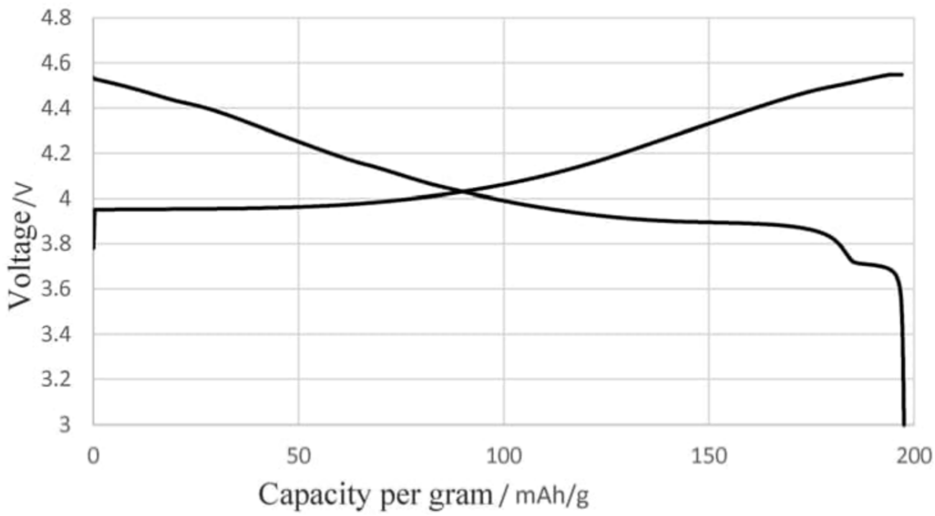


FIG. 6A

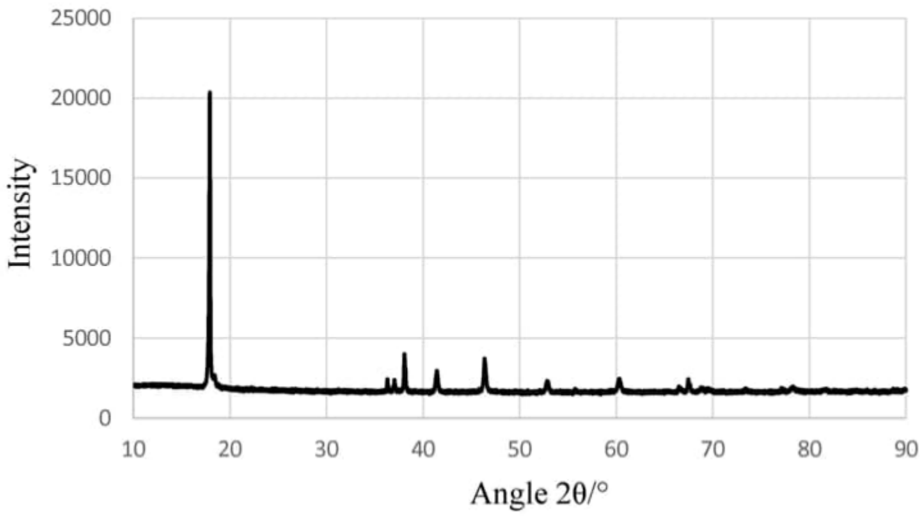


FIG. 1B

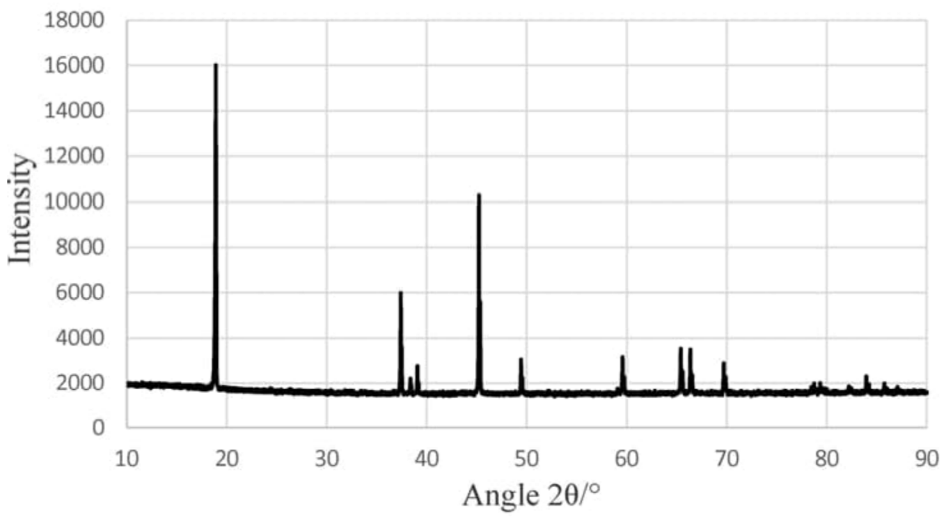


FIG. 2B

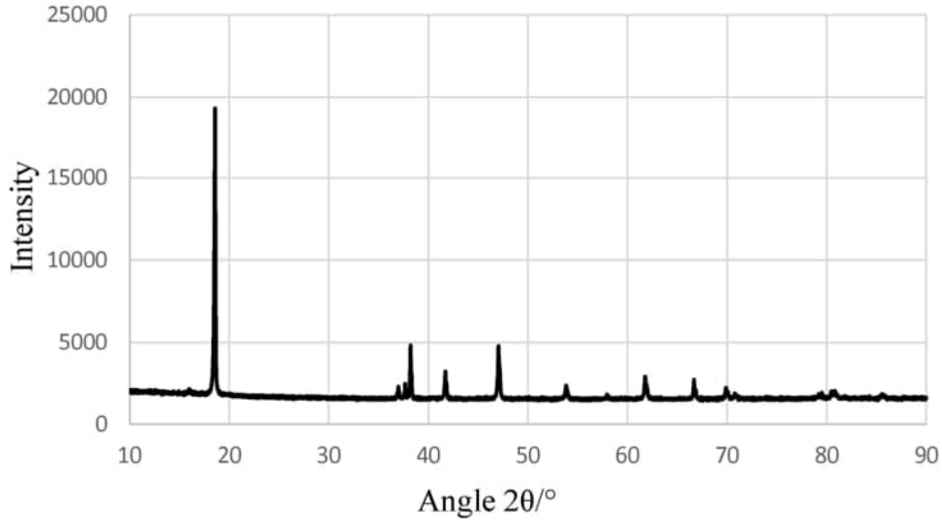


FIG. 3B

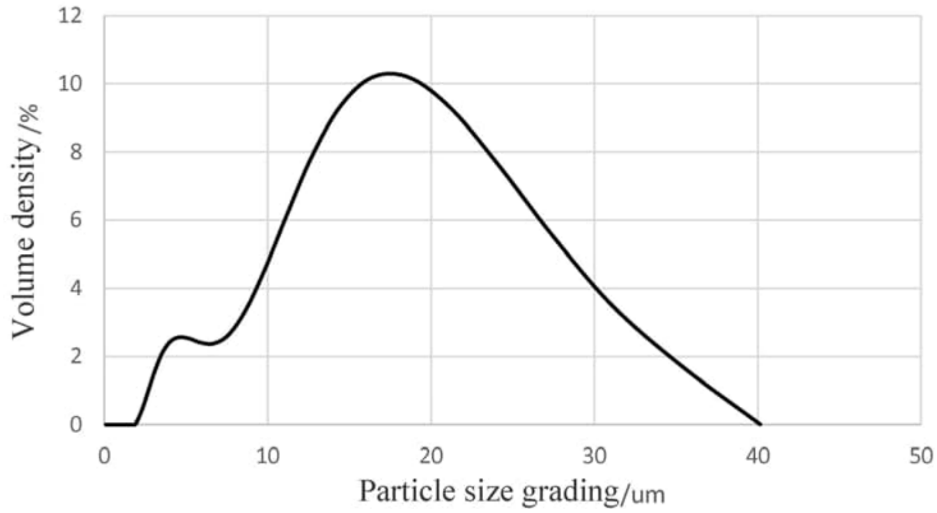


FIG. 4B

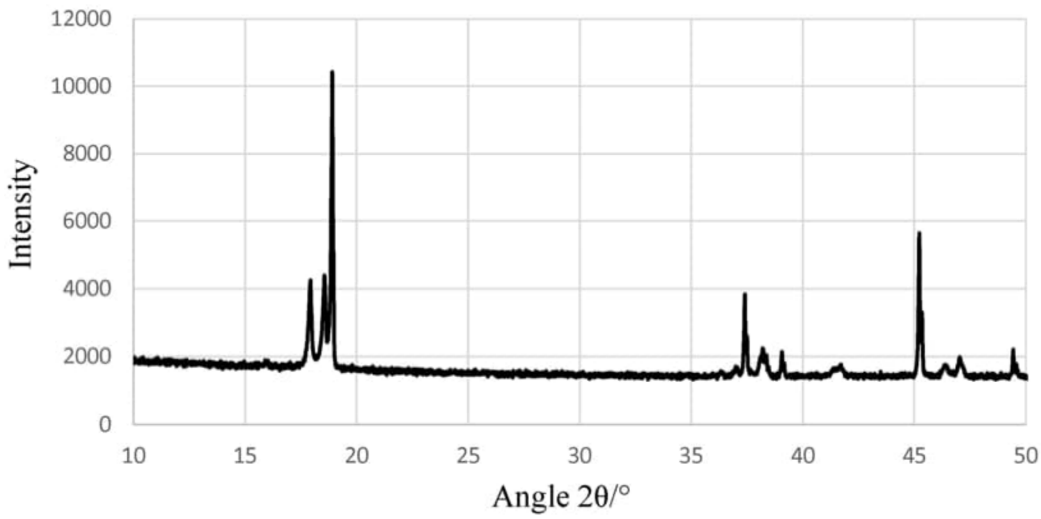


FIG. 5B

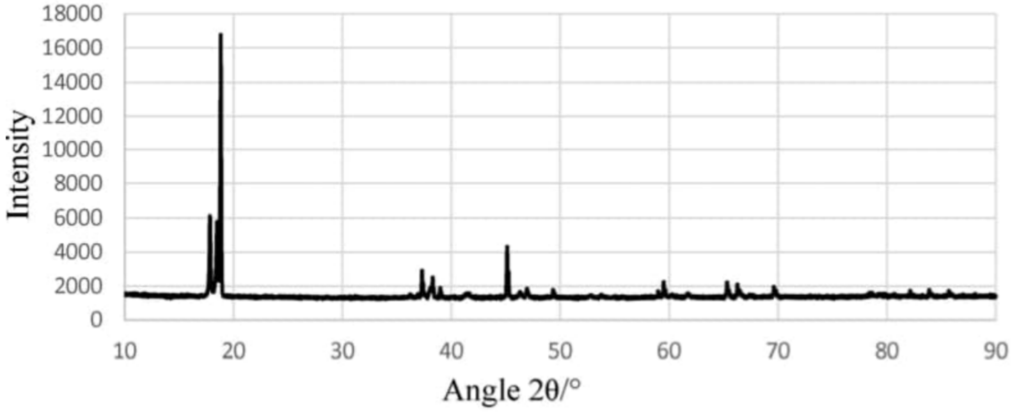


FIG. 6B

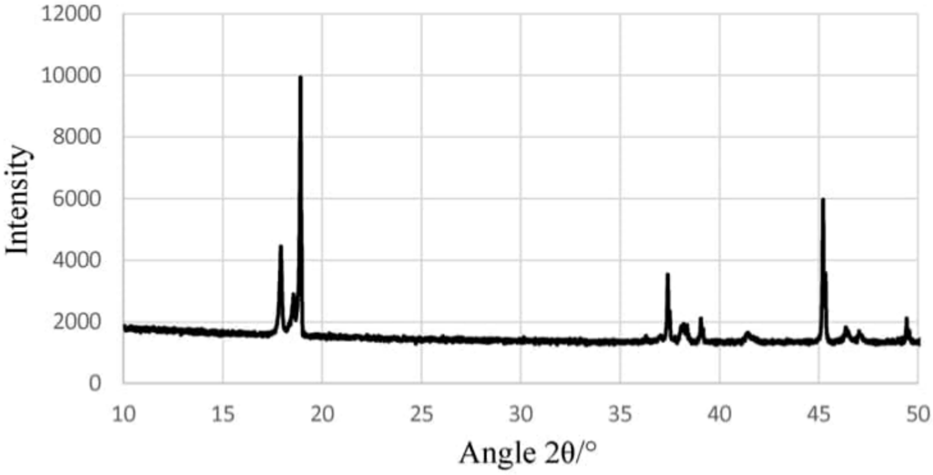


FIG. 7

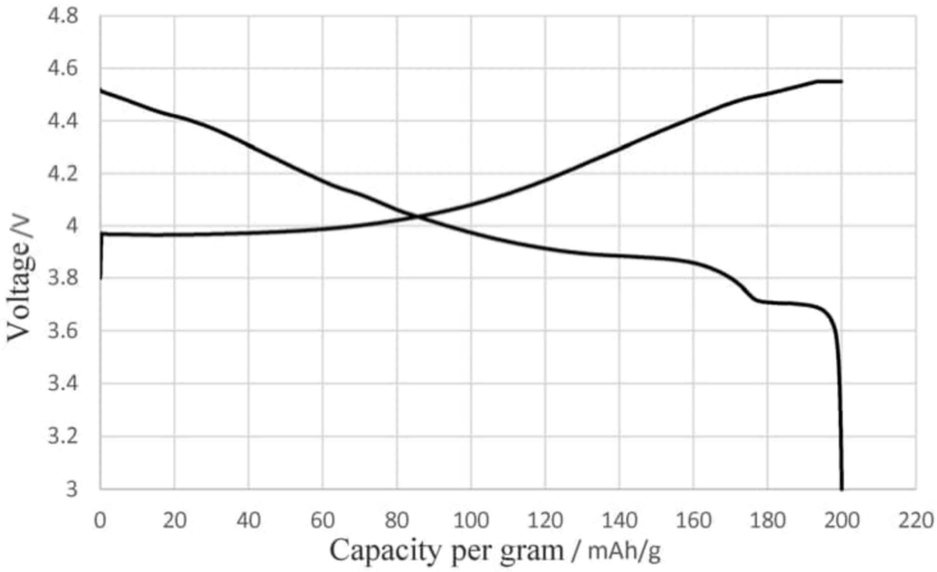


FIG. 8

## INTERNATIONAL SEARCH REPORT

International application No.
**PCT/CN2024/082354**

**A. CLASSIFICATION OF SUBJECT MATTER**

H01M4/525(2010.01)i； H01M4/485(2010.01)i； H01M4/48(2010.01)i

According to International Patent Classification (IPC) or to both national classification and IPC

**B. FIELDS SEARCHED**

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, DWPI, ENTXTC, CNKI: 正极, X射线衍射, 多峰, 双峰, 钠, 钴, 锂, 003, 2THETA, Co, Li, Na, 20, positive electrode, lithium, sodium, cobalt

**C. DOCUMENTS CONSIDERED TO BE RELEVANT**

| Category* | Citation of document, with indication, where appropriate, of the relevant passages | Relevant to claim No. |
|---|---|---|
| X | CN 105940533 A (SANTOKU CORP.) 14 September 2016 (2016-09-14)<br>description, paragraphs 0061-0066, and embodiments 1-6 | 1-21 |
| A | CN 114497525 A (NINGDE AMPEREX TECHNOLOGY LTD.) 13 May 2022 (2022-05-13)<br>entire document | 1-21 |
| A | CN 115275171 A (ZHUHAI COSMX BATTERY CO., LTD.) 01 November 2022 (2022-11-01)<br>entire document | 1-21 |
| A | CN 115732661 A (ZHUHAI COSMX BATTERY CO., LTD.) 03 March 2023 (2023-03-03)<br>entire document | 1-21 |
| A | CN 103779542 A (SONY CORP.) 07 May 2014 (2014-05-07)<br>entire document | 1-21 |
| A | JP 2015038830 A (TODA KOGYO CORP.) 26 February 2015 (2015-02-26)<br>entire document | 1-21 |
| A | US 2019221845 A1 (LG CHEMICAL LTD.) 18 July 2019 (2019-07-18)<br>entire document | 1-21 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 June 2024** | **12 June 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/082354**

| Patent document cited in search report | Publication date (day/month/year) | Patent family member(s) | Publication date (day/month/year) |
|---|---|---|---|
| CN 105940533 A | 14 September 2016 | US 2016315320 A1 | 27 October 2016 |
| | | US 10741838 B2 | 11 August 2020 |
| | | KR 20160098315 A | 18 August 2016 |
| | | EP 3082183 A1 | 19 October 2016 |
| | | EP 3082183 A4 | 07 June 2017 |
| | | EP 3082183 B1 | 10 October 2018 |
| | | JPWO 2015088007 A1 | 16 March 2017 |
| | | JP 6722454 B2 | 15 July 2020 |
| | | WO 2015088007 A1 | 18 June 2015 |
| CN 114497525 A | 13 May 2022 | None | |
| CN 115275171 A | 01 November 2022 | None | |
| CN 115732661 A | 03 March 2023 | None | |
| CN 103779542 A | 07 May 2014 | US 2014114519 A1 | 24 April 2014 |
| | | JP 2014086203 A | 12 May 2014 |
| | | JP 5962429 B2 | 03 August 2016 |
| JP 2015038830 A | 26 February 2015 | JP 6155957 B2 | 05 July 2017 |
| US 2019221845 A1 | 18 July 2019 | EP 3447830 A1 | 27 February 2019 |
| | | EP 3447830 A4 | 03 July 2019 |
| | | US 11183691 B2 | 23 November 2021 |
| | | KR 20180072567 A | 29 June 2018 |
| | | KR 102147364 B1 | 24 August 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310420121
- CN 202310420146